# EUROPÄISCHE PATENTSCHRIFT

(11) **EP 3 469 224 B1**
(45) Veröffentlichungstag und Bekanntmachung des Hinweises auf die Patenterteilung: **14.04.2021**
(21) Anmeldenummer: 17718547.7
(22) Anmeldetag: 21.04.2017
(51) Int. Cl.: F16C 41/00, F16C 17/24, F16C 33/20, G01M 13/04

(54) **GLEITLAGER, KUNSTSTOFFGLEITELEMENT, SYSTEM UND VERFAHREN ZUR VERSCHLEISSERKENNUNG**
SLIDING BEARING, PLASTIC SLIDING MEMBER, SYSTEM AND METHOD OF WEAR DETECTION
PALIER LISSE, ÉLÉMENT DE GLISSEMENT EN MATIÈRE PLASTIQUE, SYSTÈME ET PROCÉDÉ DE DÉTECTION DE L'USURE

(30) Priorität: 21.04.2016 DE 202016102133 U
(43) Veröffentlichungstag der Anmeldung: 17.04.2019
(73) Patentinhaber: Igus GmbH, 51147 Köln (DE)
(72) Erfinder: JANSA, Darius, 50765 Köln (DE); SCHMER, Konstantin, 50827 Köln (DE); NIERMANN, Stefan, 40882 Ratingen (DE)
(74) Vertreter: Lippert Stachow Patentanwälte Rechtsanwälte
(86) Internationale Anmeldenummer: PCT/EP2017/059571
(87) Internationale Veröffentlichungsnummer: WO 2017/182662

(56) Entgegenhaltungen:
- DE-A1- 2 115 506
- DE-A1- 10 227 677
- DE-A1-102004 010 348
- DE-U1- 20 104 695
- US-A- 5 701 119

## Beschreibung

Die Erfindung liegt allgemein auf dem Gebiet der Lagertechnik im Maschinenbau, d.h. der Lager (Engl. "bearing") zum Führen gegeneinander beweglicher Bauteile, insbesondere auf dem Gebiet der Gleitlager (Engl. "plain bearing"), im Gegensatz zu Wälzlagern (Engl.: "rolling bearing").

Gattungsgemäß für die Erfindung ist ein Gleitlager zur möglichst wartungsfreien und schmiermittelfreien Lagerung sowie ein Gleitelement hierfür, nämlich ein Gleitelement aus einem technischen Kunststoff mit tribologisch optimierten Eigenschaften zur Verringerung der Reibung zwischen den bewegten Teilen.

Gleitlager im vorliegenden Sinne haben ein erstes Bauteil umfassend mindestens ein Gleitelement aus Kunststoff, welches eine Gleitfläche aufweist zur beweglichen Führung eines zweiten Bauteils relativ zum ersten Bauteil, insbesondere durch schmierfreie Festkörperreibung. Das Gleitelement kann dabei als zusätzliches Bauteil, z.B. als Gleitlagerbuchse, zur mechanischen Entkoppelung von zwei relativ zueinander beweglichen Bauteilen eingesetzt werden. Das Gleitelement aus Kunststoff kann auch selbst das lagernde oder gelagerte Bauteil der mechanischen Lagerung bilden. Das geführte Bauteil kann aus Metall hergestellt sein.

Vorliegend werden insbesondere Gleitlager mit Festkörperreibung betrachtet (sog. Trockenreibung, d.h. ohne Flüssigschmierung), wobei mindestens ein Reibungspartner aus Kunststoff hergestellt ist. Moderne Kunststoff-Gleitlager nutzen spezielle Kunststoffe, welche ggf. "selbstschmierende" Eigenschaften haben können, und zählen in den letzten Jahrzehnten zu den wichtigsten Bauarten schmierungs- und wartungsfreier Gleitlager.

Bedingt durch inhärente Reibung ist ein gewisser Verschleiß, insbesondere durch abriebbedingte Abnutzung, bei Gleitlagern unvermeidbar. Der Verschleiß definiert die bestimmungsgemäße Lebensdauer des Gleitlagers oder, etwa bei unsachgemäßer Verwendung oder Überlast, auch ggf. einen früheren Ausfallzeitpunkt.

Die Erfindung betrifft daher ein System zur Erkennung von Verschleiß (Engl. detection of deterioration) bei gattungsgemäßen Gleitlagern und dessen Anwendung. Die Erfindung betrifft vor allem ein Gleitlager und ein Gleitelement, welche zur Verschleißerkennung geeignet sind. Die Verschleißerkennung soll wünschenswerterweise kontaktlos bzw. berührungslos erfolgen.

Aus der Elektrotechnik sind zur berührungslosen Erkennung sog. RFID-Systeme bekannt. Diese dienen vor allem dem berührungslosen Lokalisieren und Identifizieren von Gegenständen. RFID-Systeme bestehen im Wesentlichen aus mindestens einem Transponder, oft auch RFID-Tag genannt, der eine Identifikationsinformation enthält, sowie einem entsprechenden Lesegerät, welches die Kennung auslesen kann. Das Lesegerät erzeugt Radiowellen, d.h. ein elektromagnetisches Wechselfeld, dem der Transponder ausgesetzt ist. Passive Transponder entziehen über deren Antenne ein Teil der elektrischen Feldenergie und nutzen diese zur eigenen Versorgung während der Kommunikation. Aktive Transponder besitzen eine eigene Stromquelle. Der Transponder moduliert in beiden Fällen eine Antwort in das Wechselfeld, die vom Lesegerät erkannt wird. RFID-Transponder sind aufgrund hoher Stückzahlen und des einfachen Aufbaus sehr preiswert erhältlich, bauen klein und sind robust. Sie sind daher bereits weit verbreitet, und werden beispielsweise seit Jahrzehnten für den Diebstahlschutz an Waren angebracht. In jüngerer Zeit werden RFID-Systeme z.B. zur Identifikation von Ausweispapieren, für Wegfahrsperren in Fahrzeugen, oder auch für Banknoten verwendet.

Auch im Maschinenbau allgemein, insbesondere bei Lagern (Engl. bearing), speziell in Herstellung und Anwendung von Wälzlagern, ist der Einsatz von RFID-Systemen bereits bekannt.

Das Patent US 7,534,045 B2 beschreibt ein Wälzlager mit einer besonderen Aufnahme für einen RFID-Tag, welcher eine Vielzahl Informationen zum Wälzlager dauerhaft und kontaktlos abrufbar speichert, z.B. Typbezeichnung, Toleranzangaben, Sonderanforderungen, Herstellungszeitpunkt und -Losnummer, usw. Das Patent US 6,501,382 B1 mit einer ähnlichen Offenbarung schlägt weiter vor, den RFID-Tag auch zur Erkennung der Echtheit bzw. einer Produktfälschung zu nutzen. Eine darüber hinausgehende Nutzung des RFID-Tags ist in beiden Fällen nicht beschrieben.

Die Patentanmeldung WO 2009/127190 A1 zeigt eine spezielle Ausführungsform einer RFID-Transponder-Antenne, die in Bauteilen überwiegend aus Metall, insbesondere in Wälzlagern, aber auch in Gleitlagern und Linearführungen aus Metallbauteilen verwendbar sein soll. Die Antenne zeigt eine einfache Schlitzform, die weitestgehend unabhängig von der Lagerform ausgebildet werden kann. Hierdurch können Schwierigkeiten u.a. wegen inhärenter Abschirmung durch Metallteile, vermieden werden.

Die Patentanmeldung DE 10 2007 009 093 A1 zeigt eine Wälzlageranordnung mit Laufflächen und dazwischen Wälzkörpern. An einem Wälzkörper ist ein aktiver RFID-Tag mit einem Speicher angeordnet, welcher durch einen zusätzlichen Sensor am Wälzkörper ermittelte Kräfte zwischenspeichert und drahtlos weiterleitet.

Die vorgenannten RFID-Lösungen gestatten eine Identifizierung von Produkten und das Auslesen gespeicherter Daten. In Verbindung mit weiteren Sensoren ermöglichen diese Lösungen zum Teil auch die Zustandsprüfung und theoretisch eine Erkennung von Verschleiß.

Zusätzliche Sensoren zur Ermittlung physikalischer Größen müssten elektrisch versorgt werden und bedeuten Mehraufwand. Dies führt zu Kostensteigerungen, die erhebliche Vorteil von Kunststoff-Gleitlagern aufheben, nämlich die einfache Bauweise und den meist spürbar geringeren Kostenpunkt gegenüber Wälzlagern in konventioneller Metallbauweise.

Die DE 102 27 677 A1 offenbart eine Vorrichtung zur Fernüberwachung des Zustands eines Maschinenteils, das im Betrieb fortschreitendem Verschleiß unterliegt, mittels wenigstens einer elektrischen Leiterbahnstruktur, die so an dem Maschinenteil angebracht ist, dass sie im Laufe des Betriebs gemeinsam mit dem Maschinenteil verschleißt. Die Fernüberwachung, z.B. an einem Schneidwerkzeug, wird dabei mittels eines Transponder erzielt und ist u.a. wegen der Leiterbahnstruktur recht aufwendig in der Herstellung Eine naheliegende Vorrichtung ist aus DE 102 27 677 A1 bzw. DE 10 2004 010348 A1 bekannt.

Eine erste Aufgabe der vorliegenden Erfindung ist es mithin, eine Lösung zur berührungslosen Zustandsprüfung, insbesondere zur berührungslosen Verschleißerkennung, in einem Gleitlagers bzw. in einem Gleitelement für ein solches Gleitlager vorzuschlagen. Die Lösung soll einfach im Aufbau und kostengünstig herstellbar sein.

Gemäß einem ersten Aspekt der Erfindung wird bei einem Gleitlager nach dem Oberbegriff aus Anspruch 1 zur Lösung der erstgenannten Aufgabe vorschlagen, dass das erste Bauteil eine Vorrichtung aufweist zur Erkennung von Verschleiß in einem kritischen Bereich des mindestens einen Gleitelements aus Kunststoff. Der kritische Bereich kann ein Teil der Gleitfläche (im Neuzustand) sein, an diese angrenzen oder insbesondere dieser Gleitfläche unmittelbar benachbart in Richtung von fortschreitendem Verschleiß liegen. Grundsätzlich beinhaltet der kritische Bereich eine Grenze des zulässigen Verschleißes, und von dieser getrennte Teilbereiche, in welchen der Verschleiß noch als unkritisch bzw. bereits als kritisch anzusehen ist. Der kritische Bereich ist an einer verschleißanfälligen Stelle vorzusehen.

Gemäß dem ersten Aspekt der Erfindung hat die Vorrichtung zur berührungslosen Verschleißerkennung einen Transponder und ein Detektorelement. Das Detektorelement wirkt dabei mit dem Transponder zusammen und ist am Gleitelement derart angeordnet und gestaltet, dass das Detektorelement bei einem vorbestimmten Ausmaß von Verschleiß im kritischen Bereich das Verhalten des Transponders ändert. Durch diese Konfiguration wird die verschleißbedingte Änderung anhand des Transponders selbst drahtlos erkennbar, d.h. ohne Berührung des zu prüfenden Bauteils. Dies ermöglicht insbesondere auch eine laufende Überwachung ohne Unterbrechung des Betriebs. Ein elektrotechnisches Wirkprinzip ist zwecks eventueller Automatisierung, insbesondere bei einer Vielzahl zu überwachender Gleitlager, vorteilhaft.

Das vorbestimmte Ausmaß von Verschleiß kann insbesondere eine abriebbedingte Verschleißgrenze gegenüber dem Neuzustand darstellen, welche bei bestimmungsgemäßem Gebrauch gegen Ende der nominalen Lebensdauer des Gleitelements erreicht wird. Mit anderen Worten, es handelt sich um eine Grenze, nach deren Überschreitung ein zuverlässiger Betrieb nicht mehr gewährleistet ist.

Der zu erkennende Verschleiß kann jede Art lagerspezifischer Degradation bzw. Abnutzung sein, z.B. Abnutzung durch Abrieb, Rissbildung und/oder Ermüdungsbruch, insbesondere aber Abnutzung durch Abrieb an der Gleitfläche aufgrund der Festkörperreibung zwischen dem Gleitelement aus Kunststoff und dem von diesem zu lagernden Bauteil, das z.B. aus Metall gefertigt sein kann.

Weil das Detektorelement bei einem vorbestimmten Ausmaß von Verschleiß im kritischen Bereich im Wesentlichen nur das Verhalten des Transponders ändert, sodass diese verschleißbedingte Änderung - z.B. gegenüber eines Nominalverhaltens - drahtlos erkennbar ist, kann eine elektrotechnisch einfache Lösung ohne ausgeprägte Sensor-Komponenten und dgl. realisiert werden. Als Detektorelement kommt insbesondere ein inhärenter oder leicht angepasster Bestandteil des Transponders in Betracht.

Die Erfindung beruht u.a. auf der überraschend einfachen Erkenntnis, dass die Feststellung eines kritischen Grads von Verschleiß, eine Messung im eigentlichen Sinne, d.h. zur quantitativen Bestimmung einer Größe, nicht erfordert. Aufgrund der berührungslosen Erkennung ist es zudem unerheblich, ob die Vorrichtung zur Verschleißerkennung am einem in Bezug auf die Maschine bzw. das Gerät bewegten oder feststehenden Bauteil der Lagerung vorgesehen ist.

Für die erfindungsgemäße Lösung geeignete oder mit geringem Aufwand adaptierbare Transponder sind zu sehr geringen Stückkosten bereits erhältlich. Die erfindungsgemäße Lösung vermeidet anhand der drahtlosen Erkennbarkeit einerseits in Kombination mit dem für den Transponder verhaltensbestimmenden Detektorelement andererseits, unter anderem Aufwand für Sensoren, deren Einbau, Verdrahtung etc. Zudem kann das Detektorelement passiv, robust, mit sehr geringem Gewicht und mit äußerst kleiner Baugröße ausgeführt werden. So vermeidet die Erfindung u.a. Unwucht und erlaubt den Einbau grundsätzlich auch in kleine Gleitelemente aus Kunststoff, z.B. Kunststoff-Lagerbuchsen mit geringer Wandstärke und kleinem Durchmesser. Das Gleitelement kann selbst das lagernde Bauteil bilden (d.h. das eine Bauteil der Lagerung besteht aus dem Gleitelement), oder eines von mehreren Bestandteilen hiervon darstellen. Es kann z.B. ein übergeordnetes Lagergehäuse vorgesehen sein, etwa wenn das Gleitlager als Gehäuselager ausgeführt ist. Besonders aber nicht allein im erstgenannten Fall ist eine kompakte Bauweise von Transponder und Detektorelement vorteilhaft.

In einem einfach herstellbaren Ausführungsbeispiel hat das Gleitelement eine Aussparung in seiner Gleitfläche, in welcher das Detektorelement angeordnet ist, und vorzugsweise vollständig darin aufgenommen ist, insbesondere zusammen mit dem Transponder. Die Aussparung kann von der Gleitfläche ausgehen und erlaubt es, das Detektorelement insbesondere gegenüber der Gleitfläche in Richtung von fortschreitendem Verschleiß einwärts versetzt vorzusehen, d.h. vom relativbeweglichen anderen Bauteil entfernt. Auf diese Art kann bzw. durch geeignete Wahl des Abstands zwischen der Gleitfläche (im neu hergestellten Zustand) und dem Wirkpunkt des Detektorelements das zulässige Ausmaß von Verschleiß nach Wunsch vorgegeben bzw. vorbestimmten werden. Erreicht der Verschleiß diese Grenze spricht das Detektorelement an, z.B. durch Zerstörung oder eine abriebbedingte Leiterunterbrechung.

Vorzugsweise wird das Detektorelement, ggf. gemeinsam mit dem Transponder, in einer Aufnahme im Gleitelement aus Kunststoff aufgenommen und mit dem Gleitelement darin eingebettet, d.h. das Detektorelement bzw. der Transponder sind durch umgebendes Material gegen außen gehalten, vorzugsweise dicht eingeschlossen bzw. umschlossen. Dieses Material kann identisch zum Kunststoff des Gleitelements sein oder davon verschieden, insbesondere weniger verschleißfest. Ein bevorzugtes stoffschlüssiges Integrieren im Körper des Gleitelements kann auf verschiedene Arten erfolgen, z.B. durch Umspritzen bei der Spritzguss-Herstellung, durch anspritzen bzw. nachträgliches Verfüllen, durch additive Verfahren usw. Die stoffschlüssige Verbindung des einschliessenden Materials mit dem Kunststoff des Gleitelements ermöglicht eine Kapselung und/oder eine Lagefixierung.

Zur möglichst geringen Beeinträchtigung der Lagerfunktion des Gleitelements sollte das Flächenmaß der Aussparung (im Sinne der auf die Gleitfläche projizierten Grundfläche) in Bezug auf das Flächenmaß der Gleitfläche selbst möglichst gering sein, insbesondere kleiner als 20%, bevorzugt kleiner als 10%.

In besonders preiswerter und in der Herstellung einfach zu handhabender Ausführung, sind der Transponder und das zusammenwirkende Detektorelement in ein Erkennungsmodul integriert. Das Erkennungsmodul kann z.B. in Form eines passiven RFID-Transponders oder in entsprechender Technologie gefertigt sein. Die Abmessungen des Moduls sind hierbei vorzugsweise deutlich kleiner als die entsprechenden Abmessungen des Kunststoffgleitelements. Das Erkennungsmodul wird dabei so an dem mindestens einen zu überwachenden Kunststoffgleitelement angeordnet, dass das Detektorelement im kritischen Bereich liegt, insbesondere mit einem Wirkbereich auf der Verschleißgrenze. Hierzu können die Kunststoffgleitelemente vorgefertigte Aufnahmen oder Aussparungen aufweisen.

Alternativ kann das Detektorelement als getrennte Komponente mit einem handelsüblichen Transponder, z.B. einem RFID-Transponder bzw. RFID-Tag, verbunden werden. Nach der Erfindung wird bei besonders kleinen Gleitelementen, der Transponder von der Gleitfläche entfernt und außerhalb des kritischen Bereichs vorgesehen. Lediglich ein klein bauendes Detektorelement, z.B. ein Leiter als Nebenschluss (Engl. "shunt conductor") eines Schaltkreises, wird dabei in den kritischen Bereich geführt.

Bevorzugt hat jeder Transponder genau ein Detektorelement zur Erhöhung der Stückzahlen. Entsprechend hat das Gleitelement bevorzugt einen Transponder mit genau einem Detektorelement. Alternativ können einem Transponder eine Anzahl n Detektorelemente an einem oder an n Kunststoff-Gleitelementen zugeordnet sein, die ggf. jeweils über eine relativ kurze Detektorleitung auf den gemeinsamen Transponder einwirken. Die Anzahl n soll jedoch möglichst klein bleiben.

Eine n:1 Relation mit n Detektorelementen pro Transponder erlaubt eine zuverlässigere Erkennung ist jedoch aufwendiger. So können bei mehrteiliger Bauweise des Gleitlagers, d.h. wenn im ersten Bauteil eine Anzahl Gleitelemente vorgesehen sind, einige oder alle Gleitelement jeweils ein Detektorelement aufweisen, und die Detektorelemente mit einem gemeinsamen Transponder, vorzugsweise einem RFID-Transponder mit einem Mikrochip, der Anschlüsse zur Verbindung mit den einzelnen Detektorelementen aufweist, verbunden sein. Wenn an ein und demselben Kunststoffgleitelement oder an verschiedenen Gleitelementen Detektorelemente mit entsprechend unterschiedlichen Verschleißgrenzen angeordnet sind und mit einem gemeinsamen Transponder, z.B. einem RFID-Transponder mit Mikrochip, zusammenwirken, lassen sich beispielsweise verschiedene Stufen von Verschleiß ermitteln. Der Mikrochip kann dazu mehrere Eingänge zum Anschließen der einzelnen Detektorelemente umfassen, und eine von deren Zustand abhängige Information als Veränderung an ein Lesegerät senden. Als Lesegerät kommt insbesondere ein sende- und empfangsfähiger Transceiver in Betracht.

Die Änderung des durch ein Lesegerät bzw. einen Transceiver erfassbaren Transponderverhaltens kann auf viele verschiedene Arten realisiert werden, insbesondere als elektrotechnisch messbare Parameteränderung. Besonders einfach realisieren lässt sich z.B. eine Leitungsunterbrechung oder ein Leitungskurzschluss, welche die Betriebsbereitschaft des Transponders beeinflusst, erfassen. So kann das Detektorelement insbesondere den Betrieb des Transponders freischalten oder diesen abstellen. Es kann z.B. die Schaltungstopologie durch den kritischen Verschleiß modifiziert werden, oder ein elektrotechnisch messbarer oder funktionsrelevanter Parameter, wie z.B. die Impedanzwerte (Wechselstromwiderstands-Werte) einer Resonanzschaltung im Transponder usw., verändert werden. Entscheidend für das Prinzip ist, dass der Transponder als Indikator zur Verschleißerkennung ein erkennbar anderes Verhalten zeigt bei Erreichen bzw. Überschreiten des zulässigen Ausmaß an Verschleiß, und dies über Funk bzw. drahtlos erfassbar ist. So kann z.B. über eine Detektorleitung hin zu dem bzw. den kritischen Bereichen eine Leitungsunterbrechung die Verhaltensänderung herbeiführen. Es kann z.B. auch ein Teil der Transponder-Antenne selbst dem Verschleiß im kritischen Bereich so ausgesetzt sein, dass diese ausfällt wenn das vorbestimmte vorbestimmten Ausmaß von Verschleiß im kritischen Bereich erreicht oder überschritten ist.

Unter anderem die eingangs gestellte erste Aufgabe wird auch durch ein Gleitelement nach Anspruch 13 gelöst. Die Erfindung betrifft daher gemäß einem weiteren, unabhängigen Aspekt auch ein Gleitelement aus einem tribologischen Kunststoff für ein Gleitlager zur schmiermittelfreien Lagerung, umfassend einen Transponder und ein Detektorelement zur elektrotechnischen und berührungslosen Verschleißerkennung. Das Detektorelement ist in einem gegenüber Verschleiß, insbesondere durch festkörperreibungsbedingte Abnutzung, anfälligen kritischen Bereich des Gleitelements vorgesehen, und ändert bei einem vorbestimmten Ausmaß von Verschleiß im kritischen Bereich das Verhalten des Transponders verschleißbedingt. Das Gleitelement kann eines oder mehrere der vorgenannten oder nachfolgenden bevorzugten Merkmale aufweisen, soweit auf das Freiheitsgraden.

In beiden Aspekten ändert das Detektorelement vorzugsweise das Funkverhalten des Transponders.

Der tribologisch optimierte Kunststoff kann aus einem Basispolymer mit Anteilen von Festschmierstoff-Partikeln, Verstärkungsstoffen, z.B. technischen Fasern, und/oder Füllstoffen als Zuschlag bzw. Zusätzen bestehen. Hierbei ist die Materialmischung vorzugsweise spritzgussfähig und homogen.

In einer Ausführungsform kann ein Erkennungsmodul vorgesehen werden, das einen Träger oder ein Gehäuse aufweist mit einem eine Antenne aufweisenden Transponder, und einem davon abgesonderten Bereich des Trägers bzw. Gehäuses, in dem ein Detektorelement in Art einer Sollbruchstelle angeordnet ist, welches bei verschleißbedingtem Bruch das Verhalten des Transponders ändert. Der Träger kann z.B. ein flexibles selbstklebendes Haftetikett darstellen. Als Gehäuse kommt andererseits z.B. ein Harzverguß eines herkömmlichen Transponders mit einem anwendungsangepassten zusätzlichen Detektorelement in Betracht. Das Modulgehäuse kann auch gemeinsam mit einer Funkschaltung im Spritzguss gegossen sein, insbesondere auch zusammen mit dem Kunststoff-Gleitlagerelement, beispielsweise im Mehrkomponenten- und/oder IMKS-Verfahren (Integriertes Metall Kunststoff Spritzgießen). Das Erkennungsmodul kann so angeordnet werden, dass das Detektorelement in dem vorbestimmten kritischen Bereich liegt der zu überwachen ist.

In einer weiteren Ausführungsform weisen eine Anzahl Kunststoffgleitelemente jeweils in einem verschleißanfälligen Bereich der Lagerung jeweils mindestens ein Erkennungsmodul auf. Dies erlaubt auch bei schwerer Vorhersage des auf Verschleiß anfälligsten Kunststoffgleitelements und/oder bei einer gewissen Fehlerrate des Transponders, z.B. einer gewissen false-positive oder false-negative Rate, wie bei sehr preisgünstigen Passivtranspondern üblich, eine stochastisch zuverlässige Erkennung.

Das Detektorelement wirkt vorzugsweise elektrotechnisch, insbesondere schaltungstechnisch mit dem Transponder zusammen. Es kann als gesonderte Komponente mit dem Transponder verbunden sein, sodass das Auslöseverhalten nach Wunsch wählbar ist.

Das Detektorelement kann als vorhandener oder modifizierter Bestandteil eines bereits bekannten Transponders ausgeführt sein, was Herstellungskosten minimiert.

In einer einfachen Ausführungsform ist das Detektorelement als Leitungsabschnitt einer Detektorleitung ausgeführt, der im kritischen Bereich verläuft, z.B. ähnlich einer Sollbruchstelle dem vorbestimmten Ausmaß von Verschleiß ausgesetzt wird, und bei dem vorbestimmten Ausmaß von Verschleiß unterbrochen werden soll. Die Unterbrechung kann je nach Schaltungsanordnung die Betriebsbereitschaft des Transponders unterbinden oder diese erst wieder herstellen.

In einer Variante, welche die Betriebsbereitschaft verschleißabhängig freischaltet, d.h. sozusagen den Transponder einschaltet, hat der Transponder eine Antenne, welche im unbenutzten Neuzustand des Gleitlagers bzw. Gleitelements über das Detektorelement kurzgeschlossen ist. Je nach der Grundfrequenz des Transponders, kommt anstelle eines (niederfrequenten) "Kurzschlusses" eine Veränderung von einer Fehlabstimmung hin zu einer ausreichenden Abstimmung der Impedanz oder Leistungsübertragung von der bzw. an die Antenne in Betracht, z.B. über offene oder kurzgeschlossene Stichleitungen, welche verschleißbedingt verändert werden. Dies erlaubt es, das Detektorelement so auszuführen, dass es bei dem vorbestimmten Ausmaß von Verschleiß den "Kurzschluss" öffnet bzw. von Fehlanpassung auf Anpassung umstellt und damit die Antennenfunktion freigibt. Somit wird der Transponder erst vom Lesegerät erkannt, wenn die Verschleißgrenze erreicht ist.

Alternativ hierzu, kann der Transponder außer Betrieb genommen werden, wenn das Detektorelement als ein Bestandteil der Antenne selbst ausgeführt ist, der so im kritischen Bereich verläuft, dass die Antenne bei dem vorbestimmten Ausmaß von Verschleiß unterbrochen bzw. funktionsuntauglich wird. Diese Lösung ist vorteilhaft bei Transpondern mit nennenswerter Funk-Fehlerrate, da zunächst sichergestellt werden kann, dass der Transponder antwortet. Zudem kann ein nominal betriebsbereiter Transponder für die üblichen RFID-Funktionen z.B. Produktinformation etc. genutzt werden.

Insbesondere, aber nicht ausschließlich für autark aus der Funkleistung versorgte bzw. passive Transponderkonfigurationen, ist es vorteilhaft, wenn die Antenne als Induktionsspule ausgeführt ist bzw. eine Induktionsspule umfasst. Auch Dipolantennen sind möglich, insbesondere für höhere Frequenzbereiche, und bauen meist kleiner als Induktionsspulen.

Eine Induktionsspule als Antenne kann insbesondere bei Passivtranspondern Bestandteil eines Resonanzschwingkreises im Transponder sein, welcher als Saugkreis bzw. Schwingungstilger durch Resonanzabsorption eine vom Lesegerät bzw. Transceiver gemessene Veränderung im elektromagnetischen Feld auf der Resonanzfrequenz verursacht. Hierzu ist das sog. Frequenzhub-Verfahren bekannt, bei dem das Lesegerät die Frequenz über einen Bereich um die Resonanzfrequenz variiert, d.h. "wobbelt", um den Feldeinbruch bei Resonanz durch den Transponder zu erfassen. Entsprechende Transponderschaltungen als sog. EAS-Tags, die ursprünglich zur Warendiebstahlsicherung entwickelt wurden, offenbaren z.B. die frühen Patente US 3,810,147 oder US 3,500,373. Bei derartigen Systemen sind die Transponder äußerst preiswert herstellbar, z.B. als Haftetiketten, dass diese im Wesentlichen nur aus dem Resonanzschwingkreises mit der Induktionsspule und einem Kondensator bestehen. Zudem verbrauchen bei diesen Systemen auch die Lesegeräte wenig elektrische Leistung.

Für große Stückzahlen sind passive Transponder, insbesondere sog. 1-Bit-Transponder bzw. Single-Bit-Transponder geeignet, d.h. Transponder, die lediglich die Information vermitteln: "Transponder im Arbeitsbereich: ja" bzw. ""Transponder im Arbeitsbereich: nein" (daher 1-Bit). Hierzu kommen als Transponderkonfigurationen insbesondere in Betracht:
- Transponder in Form der o.g. RF(Radiofrequenz)-LC-Resonanzschwingkreise (sog. RF-Systeme, z.B. von der Fa. Checkpoint Systems http://us.checkpointsystems.com/ oder Agon Systems: http://www.agon-systems.com), z.B. bei 8,2 MHz Grundfrequenz des Generators: diese sind sehr preiswert und energieeffizient bei kurzer bis mittlerer Reichweite (remote coupling Bereich: bis einige Meter);
- Transponder zur Frequenz-Vervielfachung im Mikrowellenbereich, welche Harmonische der Generatorfrequenz erzeugen, typischerweise im Mikrowellenbereich, z.B. anhand einer Dipolantenne mit Kapazitätsdiode: diese erzeugen im Wesentlichen keine Fehlerkennung bzw. Fehlalarme bei hoher Reichweite (long range, bis über 10m);
- Transponder als Frequenzteiler im Langwellenbereich, z.B. zwischen ca. 90-140kHz, mit einem Mikrochip und einer Schwingkreisspule: mit ebenfalls geringer Fehlerquote;
- Transponder für das elektro-magnetische Verfahren (EM-Verfahren) im NF-Bereich bis ca. 22kHz, welche eine periodische Ummagnetisierung eines weichmagnetischen Metalls erfassen: diese eignen sich besonders für Gleitlager überwiegend aus Metallteilen (ausgenommen die Kunststoffgleitelemente), haben jedoch eine gewisse Fehlerquote (typ. ca. 25-30%) und eine kurze Reichweite (bis ca. 2m); oder
- Transponder für das akusto-magnetische Verfahren (AM-Verfahren) basierend auf dem Prinzip der Magnetostriktion, z.B. bei 58kHz von der Fa. Sensormatic (http://www.sensormatic.com): welche eine mittlere bis große Reichweite bis ca. 20m bei geringer Fehlerquote aber sehr hohem Energieverbrauch haben.

Passivtransponder der o.g. Bauarten können insbesondere durch Verschleiß ausgeschaltet bzw. unwirksam (z.B. unbrauchbar oder vollständig zerstört) werden, z.B. indem als Detektorelement ein funktionsrelevanter Bestandteil als Sollbruchstelle im kritischen Bereich angeordnet wird.

Bei Passivtranspondern mit nennenswerter Fehlerquote ist es vorteilhaft, ein System mit einer Anzahl redundanter Transponder aufzubauen. Durch Redundanz wird ermöglicht, dass erst dann übermäßiger Verschleiß signalisiert wird, wenn mehrere oder alle unabhängigen Transponder kein Rücksignal geben. So kann bei hinreichend unabhängiger Anordnung, z.B. durch räumliche Variation, das Fehlalarmrisiko (false positive) auf eine vernachlässigbare Wahrscheinlichkeit reduziert werden.

Alternativ zu passiven Single-Bit-Transpondern der vorgenannten Bauarten, kann gemäß einem weiteren Aspekt der Transponder vorzugsweise als passiver oder aktiver RFID-Transponder ausgeführt sein, mit einem Mikrochip der eine Identifikationsinformation bzw. Kennung speichert. Hierbei hat der Transponder vorzugsweise eine Antenne zur Drahtlos-Kommunikation im IFM-Band umfasst, was ggf. eine behördliche Zulassung auch bei größeren Sendeleistungen für höhere Reichweiten erübrigt.

Aktive RFID-Transponder ermöglichen größere Reichweiten der drahtlosen Überwachung z.B. für Leitungsführungen mit langem Verfahrweg (>>2m). Die Stromversorgung des bzw. der aktiven RFID-Transponder kann dabei vereinfacht werden, wenn das feststehende Bauteil der Lagerung die Erkennungsvorrichtung aufweist, oder aber aus der Bewegungsenergie gewonnen werden (z.B. durch Induktion).

Die Identifikationsinformation eines passiven oder aktiven "echten" RFID-Transponders kann über das Lesegerät abgefragt werden. So kann beispielsweise eine Plausibilitätsprüfung, eine Lokalisierung und/oder Identifikation der zu wartenden Lagerung ermöglicht werden.

Bei RFID-Systemen kommt insbesondere in Betracht, den Transponder erst bei Erreichen des kritischen Grads von Verschleiß durch das Detektorelement einzuschalten, um Fehlerkennungen zu minimieren.

Unabhängig von der gewählten Transpondertechnologie kann es zur Funktionskontrolle, insbesondere bei Erkennung mittels verschleißbedingt einschaltenden Transpondern, wünschenswert sein, einen weiteren unabhängigen Prüf-Transponder, vorzugsweise für denselben Frequenzbereich des Lesegeräts, an einem zu überwachenden Gleitlager vorzusehen. Das Verhalten des Prüf-Transponders ändert vorzugsweise nicht verschleißbedingt, d.h. dieser ist vorzugsweise im Neuzustand betriebsbereit. Der Kontroll- bzw. Prüf-Transponder sollte dabei nicht dem Verschleiß ausgesetzt sein, z.B. ohne Detektorelement ausgeführt sein, aber ansonsten möglichst ähnlich zu den Transpondern zur Verschleißerkennung im Funkbereich angeordnet sein. Der Prüf-Transponder kann Produktinformation bereitstellen.

In einer besonders einfachen und kostengünstigen Ausführungsform ist der Transponder auf einem selbstklebenden Haftetikett realisiert, vorzugsweise gemeinsam mit dem Detektorelement.

Es liegt ebenfalls im Rahmen der Erfindung, dass das Detektorelement nicht selbst durch den Verschleiß beeinträchtigt wird, sondern als Geber eine Sollbruchstelle am Kunststoffgleitelement überwacht. Hierzu können die Gleitelemente jeweils im kritischen Bereich eine Sollbruchstelle aufweisen, die bei dem vorbestimmten Ausmaß von Verschleiß das Detektorelement auslöst. Das Detektorelement kann dabei als einfaches elektromechanisches Schaltmittel ausgeführt sein, was ggf. eine gezieltere und von den elektrotechnischen Bauteilen unabhängige Einstellung der Verschleißgrenze erlaubt. So kann z.B. ein identisches Erkennungsmodul unabhängig von der Bauweise des Gleitelements jeweils für eine Vielzahl Typen von Gleitelementen verwendet werden.

Besonders kostengünstig ist eine Realisierung, bei welcher das Detektorelement als passive Schaltungskomponente bzw. als Leiterabschnitt ausgeführt ist, z.B. als Leiterschleife durch den kritischen Bereich mit einem Wendepunkt bzw. Wendeabschnitt an der Verschleißgrenze. So kann das Detektorelement selbst im kritischen Bereich eine Art Sollbruchstelle bilden, die beim vorbestimmten Ausmaß von Verschleiß bricht, und als Teil einer Detektorleitung mit dem Transponder verbunden sein. Es kommt dabei insbesondere eine Leiterschleife die wie ein Nebenschluss (Engl. "shunt conductor") wirkt als Detektorelement in Betracht.

Wenn das lagernde Bauteil in welchem das zu lagernde Bauteil geführt ist - mit Ausnahme der Vorrichtung zur Erkennung von Verschleiß - überwiegend oder ausschließlich Bestandteile aus Kunststoff umfasst, ist eine Beeinträchtigung des Funkfelds durch das Material des Gleitlagers kaum oder nicht relevant. Das erste lagernde Bauteil, d.h. das Gestell im Sinne der Mechanik, kann mithin aus dem mindestens einen oder aus mehreren Gleitelementen aus Kunststoff und der Vorrichtung zur Erkennung von Verschleiß bestehen. Alternativ kann es auch ein zusätzliches Lagergehäuse zur Halterung des bzw. der Gleitelemente aufweisen, wobei das Lagergehäuse vorzugsweise ebenfalls aus einem Kunststoff bzw. elektrisch schlecht leitenden Werkstoff hergestellt ist.

Das für die fertige Gleitlagerung neben dem Gleitlager erforderliche zweite Bauteil, beispielsweise eine Welle, eine Schiene, ein Gelenkkopf oder dgl., hingegen kann durchaus aus Metall gefertigt sein, da innenliegende Bauteile in der Regel nicht zu einer störenden Beeinträchtigung des elektromagnetischen Felds führen.

Die fertige Gleitlagerung kann ein für ein Drehlager, eine Linearführung, ein Axial-Radial-Lager oder eine Gelenklager ausgeführtes Gleitlager aufweisen, welches das zweite Bauteil mit entsprechendem bzw. entsprechenden Freiheitsgraden lagert. Auf den genauen Typ der Gleitlagerung kommt es, abgesehen von dem bzw. den Gleitelement(en) aus Kunststoff, nicht an.

Die Erfindung betrifft nach einem weiteren unabhängigen Aspekt auch ein System zur elektrotechnischen Verschleißerkennung umfassend ein Gleitlager mit mindestens einem Transponder, dessen Verhalten sich bei einem vorbestimmten Ausmaß von Verschleiß ändert, sowie ein drahtlos mit dem Transponder zusammenwirkendes Lesegerät zur drahtlosen Überwachung des Transponderverhaltens. Das System kann neben einer automatischen Signalisierung von übermäßigem Verschleiß weitere hilfreiche Funktionen aufweisen, z.B.
- eine Notausschaltung zum Anhalten der Maschine, Anlage oder dgl. welche die Lagerung benötigt;
- eine Datenschnittstelle zu einem Wartungsmeldungssystem; und/oder zu einem Warenwirtschaftssystem, bspw. für eine teil- oder vollautomatische Bestellung eines Austausch-Gleitlagers.

Eine Ausführung betrifft gemäß einem weiteren unabhängigen Aspekt auch ein Verfahren zur berührungslosen Erkennung von Verschleiß eines Gleitlagers. Hierbei verursacht insbesondere die Abnutzung einer Gleitfläche, welche durch bestimmungsgemäße Festkörperreibung des Gleitlagers bedingt ist, den zu überwachenden Verschleiß. Das Verfahren zeichnet sich dadurch aus, dass sich bei einem vorbestimmten Ausmaß von Verschleiß das Verhalten eines am Gleitlager angeordneten Transponders ändert. Diese Änderung wird über ein Lesegerät bzw. einen Transceiver drahtlos erfasst, z.B. zwecks Auslösen einer Wartungsmeldung und/oder eines Notstopps oder dgl.

Weitere Merkmale der Erfindung ergeben sich aus den beigefügten Figuren, anhand derer bevorzugte Ausführungsbeispiele der Erfindung nachfolgend ohne Beschränkung der Allgemeinheit der vorstehenden Beschreibung erläutert werden. In den Figuren bezeichnen gleiche Bezugszeichen baugleiche oder funktionsgleiche Elemente. Hierin zeigen:
FIG.1A-1E Ansichten eines beispielhaften Gleitlagers zur Drehlagerung in schematischer Darstellung mit einem Beispiel einer erfindungsgemäßen Verschleißerkennung;
FIG.2 eine schematische Darstellung als vergrößerte Teilansicht eines Gleitlagers zur Linearführung mit einem Beispiel einer Verschleißerkennung;
FIG.3 eine vergrößerte Teilansicht eines Gleitlagers nach FIG.2 mit einem anderen Beispiel einer erfindungsgemäßen Verschleißerkennung;
FIG.4 eine vergrößerte Teilansicht eines Gleitlagers mit einem weiteren Beispiel einer erfindungsgemäßen Verschleißerkennung als Prinzipschema;
FIG.5 ein Längsschnitt durch eine Gleitlagerbuchse mit Bund als Beispiel eines Gleitelements, welche mit einem weiteren Beispiel einer erfindungsgemäßen Verschleißerkennung ausgerüstet ist, als Prinzipschema;
FIG.6-8 schematische Prinzip-Schaltbilder beispielhafter RFID-Funkschaltungen zur drahtlosen Erfassung einer vorbestimmten Abnutzung in einem verschleißanfälligen Bereich;
FIG.9 ein Prinzip-Schaltbild einer besonders einfachen passiven RF-Funkschaltung in Form eines LC-Schwingkreises zur drahtlosen Erfassung einer vorbestimmten Abnutzung;
FIG.10 ein Prinzip-Schaltbild einer weiteren Funkschaltung, welche im Neuzustand betriebsbereit ist, bei Überschreiten einer ersten Verschleißgrenze nicht betriebsbereit ist und bei Überschreiten einer zweiten Verschleißgrenze wieder betriebsbereit ist;
FIG.11 ein Prinzip-Schaltbild einer RFID-Funkschaltung mit UHF-Dipolantenne und einer Trennvorrichtung hierfür;
FIG.12 ein Prinzip-Schaltbild einer RFID-Funkschaltung mit UHF-Dipolantenne mit einem Detektorelement das die Antennenparameter verändert; und
FIG.13 ein Prinzip-Schaltbild einer RFID-Funkschaltung mit UHF-Dipolantenne und einer Detektorschaltung;
FIG.14A-14C Prinzip-Schaltbilder weiterer Ausführungsbeispiele von RFID-Funkschaltungen, welche eine Funktionsprüfung erlauben; und
FIG.15A-15B einen Querschnitt (FIG:15A) eines Axial-Radial-Gleitlagers und eine vergrößerte Teilansicht eines Gleitelements hierfür (FIG.15B) als weiteres Beispiel einer Verschleißerkennung.

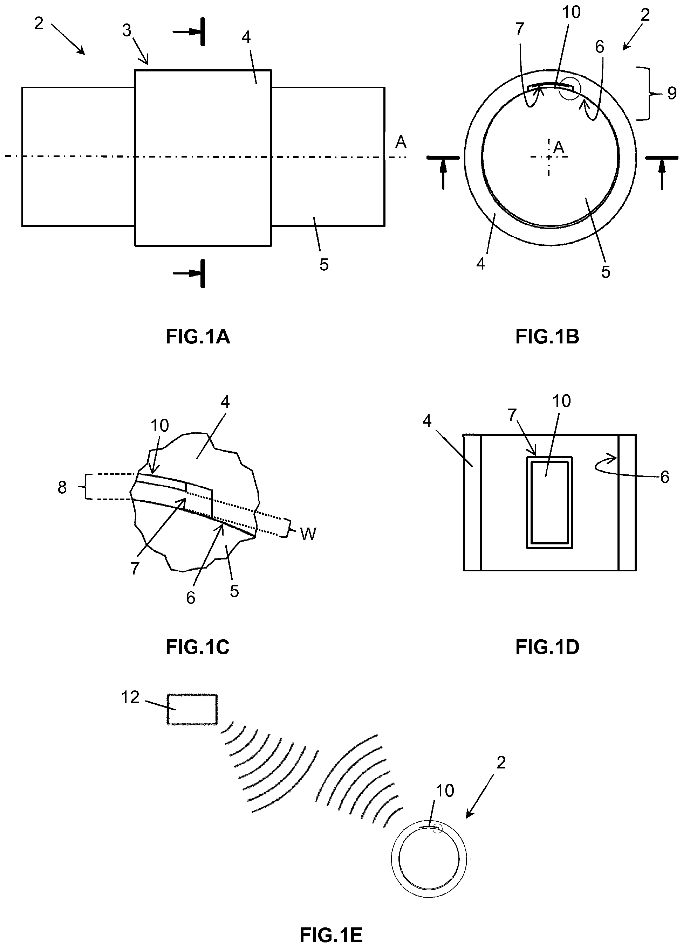

FIG.1A-1E zeigen beispielhaft ein als Radiallager bzw. Drehlager ausgeführtes Gleitlager 2, mit einem ersten Bauteil 3, welches im Wesentlichen aus einem Gleitelement 4 aus Kunststoff in Form einer kreiszylindrischen Buchse besteht. Ein zweites Bauteil 5 ist hier als drehendes Teil, z.B. hier eine axial ausgedehnte Welle (nur schematisch dargestellt). Das erste Bauteil 3 führt das zweite Bauteil 5 mit einem vorgegebenen Freiheitsgrad, z.B. um eine vorgegebene Drehachse A drehbar, welche hier durch die Achse einer innenliegenden kreiszylindrischen Gleitfläche 6 des Gleitelements 4 definiert ist. Die Bauweise nach FIG.1A-1E kann auch als Linearführung entlang der Achse A oder als Drehführung für Translation entlang der Achse A und Drehung um die Achse A genutzt werden.

Das Gleitelement 4 besteht aus einem an sich bekannten tribologisch optimierten Hochleistungskunststoff, z.B. einem geeigneten iglidur® Werkstoff der Fa. igus GmbH, DE-51147 Köln. Hier unwesentliche Einzelheiten der Bauweise eines Gleitlagers 2 und des Gleitelements 4, die dem Fachmann an sich bekannt sind, werden nicht näher erläutert.

In der Ausführung hat das erste Bauteil 3 weiterhin eine Funkschaltung 10, welche in einem kritischen Bereich 8 vorgesehen ist. Der kritische Bereich 8 ist hier ein erster Abschnitt der Wandstärke des Gleitelements 4 ausgehend von der Gleitfläche 6 in Richtung von zunehmendem Verschleiß, z.B. die ersten 25% der Wandstärke in Radialrichtung. In FIG.1A-1E ist die Funkschaltung 10 in einer eigens hierfür vorgesehenen innenseitigen Aussparung 7 des Gleitelements 4 angeordnet. Die Funkschaltung 10 ist in FIG.1A-1E z.B. in Form eines flächigen Haftetiketts mit einem RFID-tag ausgeführt. In FIG.1A-1D ist die Funkschaltung 10 vollständig in der Aussparung 7 aufgenommen und an der breiten Seite bzw. dem Boden der Aussparung 7 befestigt.

Die Aussparung 7 öffnet in die Gleitfläche 6 und reicht z.B. bis etwa 20% der Wandstärke, mit einem Boden der kreiszylindrisch und koaxial zur Gleitfläche 6 läuft. Der Befestigungsort für die Funkschaltung 10, d.h. die Lage der Aussparung 7 im Gleitelement 4 ist räumlich so gewählt, dass diese im bestimmungsgemäß überwiegend belasteten Zylindersegment 9 des ersten Bauteils 3 liegt, d.h. dort wo im Betrieb maximale Reibkraft erzeugt wird, z.B. durch nach oben wirkende Belastung am ersten Bauteil 5, wie beispielhaft in FIG.1B durch den Minimalspalt im belasteten Zylindersegment 9 zu sehen.

Die Funkschaltung 10 ist mit einem Abstand zur Gleitfläche 6 am Boden der Aussparung 7 befestigt und liegt damit (entsprechend ca. der Tiefe der Aussparung 7 minus die Dicke der flächigen Funkschaltung 10) radial von der Achse A beabstandet von der Gleitfläche 6. Der mit der Tiefe der Aussparung 7 einstellbare Abstand entspricht einer zu bestimmenden Verschleißgrenze W und gibt damit auch das Ausmaß an abriebbedingter Abnutzung der Gleitfläche 6 vor, bei welcher die Abnutzung auch die radial entfernt angeordnete Funkschaltung 10 zerstört, d.h. außer Betrieb setzt. Mit anderen Worten, wenn die Abnutzung die Verschleißgrenze W spürbar überschritten hat, wird die Funkschaltung 10 mechanisch beeinträchtigt oder zerstört und leistet z.B. nicht mehr das nominale Funkverhalten entsprechend ihrem unversehrten Neuzustand. Die Funkschaltung 10 kann dann beispielsweise die Kennung des RFID-Tag nicht mehr ordnungsgemäß rücksenden. Die radiale Tiefe der Aussparung 7 ist > W und so gewählt, dass das Gleitelement 4 noch funktionstüchtig ist, bis der Verschleiß diese Tiefe erreicht. Dies bietet Sicherheitsmarge für weiteren Betrieb bis zum Austausch des Gleitelements 4 oder des Gleitlagers 2 insgesamt.

Zur drahtlosen Erkennung des kritischen Grads von Verschleiß ist, wie näher in FIG.1E veranschaulicht, ein zur gewählten Funkschaltung 10 passender Transceiver, hier z.B. ein RFID-Lesegerät 12 vorgesehen. Das Gleitlager 2 liegt im Sende/Empfangsbereich des Lesegeräts 12, spricht über Funksignale die Funkschaltung(en) 10 an und überwacht deren Antwortverhalten. Damit lässt sich ein System zur berührungslosen Verschleißerkennung bei Gleitlagern 2 realisieren. Jedes Gleitlager 2 hat mindestens einem Transponder als Teil einer Funkschaltung 10, dessen Funkverhalten beim vorbestimmten Grad von Verschleiß, hier z.B. eine spürbare Überschreitung der Verschleißgrenze W, ändert. Die Änderung kann in einfacher Ausführung bereits darin bestehen, dass das Antwortsignal ausbleibt. Das Antwortsignal und dessen Ausbleiben wird vom Lesegerät 12 erfasst.

Das Lesegerät 12 wirkt grundsätzlich drahtlos mit der bzw. den Funkschaltungen 10 zusammen und überwacht, wie sich die Funkschaltungen 10 verhalten. Das Lesegerät 12 kann so z.B. je nach Anforderung der praktischen Anwendung des Gleitlagers 2 eine Wartungsmeldung oder einen Notstopp auslösen.

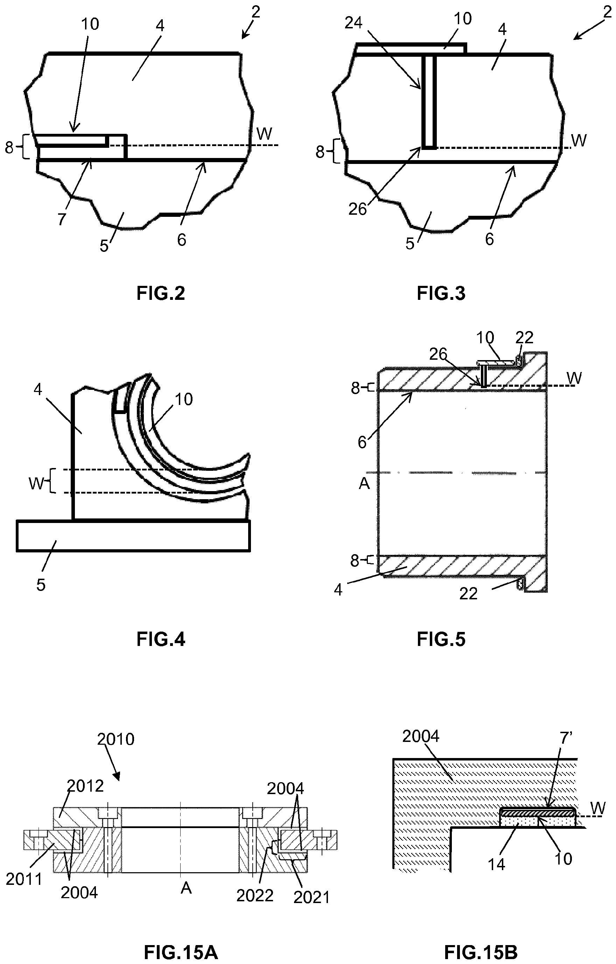

Das Gleitlager in FIG.2 unterscheidet sich vom Gleitlager nach FIG.1A-1E allein dadurch, dass es sich um eine Lineargleitführung bzw. Flachführung handelt. Dementsprechend hat das KunststoffGleitelement 4 eine das zweite Bauteil 5 führende Gleitfläche 6, die als ebene Fläche ausgeführt ist. In bzw. um einen kritischen Bereich 8 ist auch hier eine Aussparung 7 vorgesehen welche, eine Funkschaltung 10 aufnimmt, deren Funkverhalten sich ändert, wenn die reibungsbedingte Abnutzung des Gleitelements 4 die Verschleißgrenze W erreicht oder überschreitet.

Das Gleitlager nach FIG.3 ist beispielhaft ebenfalls als Linear-Gleitführung bzw. Flachführung ausgeführt. Das Prinzip dieses Ausführungsbeispiel ist jedoch analog auf einen Lagertyp nach FIG.1A-1E übertragbar. In FIG.3 hat das KunststoffGleitelement 4 in seiner Gleitfläche 6 für das zweite Bauteil 5 keine Aussparung. Vielmehr ist im kritischen Bereich 8 ein Leiterabschnitt als Detektorelement 26 auf Höhe der Verschleißgrenze W vorgesehen. Dies kann z.B. durch Eingießen einer U-förmigen Detektorleitung 24 bei der Herstellung des KunststoffGleitelements 4, insbesondere im Spritzguss-Verfahren, realisiert werden. Das Detektorelement 26 ist hier von der eigentlichen Funkschaltung 10 räumlich getrennt und mit dieser über die Detektorleitung 24 elektrisch verbunden. Die Funkschaltung 10 ist außenseitig am Gleitelement 4, an einer vom zweiten Bauteil 5 bzw. der Gleitfläche abgewandten Seit angeordnet. Diese Ausführungsform eignet sich insbesondere um die Gleitfläche 6 nicht zu beeinträchtigen und/oder für Funkschaltungen 10 mit größerer Abmessung bzw. kleineres Gleitelement. Auch hier kann die Funkschaltung 10 als RFID-Tag ausgeführt sein.

FIG.4 zeigt ein Alternativbeispiel einer Führung für Linearbewegung. Hier ist ein blockförmiges Gleitelement 4 vorgesehen, das zur Gleitlagerung des zweiten Bauteils 5 am ersten Bauteil (nicht gezeigt) dient. Das Gleitelement 4 hat eine Aufnahme, z.B. eine zylindrische Bohrung, für eine spiralig aufgewickelte Folie. Auf der aufgewickelten Folie ist die Funkschaltung 10 angebracht, z.B. als flexibler RFID-Tag. So kann auch bei engen Platzverhältnissen, z.B. in einem Gleitelement 4 mit kleineren Abmessungen als die Funkschaltung 10 benötigt, eine solche vorgesehen werden. Dabei ist die Aufnahme im Gleitelement 4 derart angeordnet, dass übermäßiger Verschleiß die Folie mit der Funkschaltung 10 freilegt und dem weiteren Verschleiß unmittelbar aussetzt. Wird die Verschleißgrenze W überschritten, fällt die Funkschaltung 10 aus.

FIG.5 wiederum zeigt ein weiteres bevorzugtes Ausführungsbeispiel eines Gleitelements 4 für ein Drehlager, nämlich einer Gleitlagerbuchse aus tribologischem Kunststoff, z.B. aus einem Kunststoff des Typs iglidur® G, W300, J, X oder iglidur M250 der Fa. igus GmbH. Das Lagergehäuse und das zweite Bauteil sind hier nicht gezeigt.

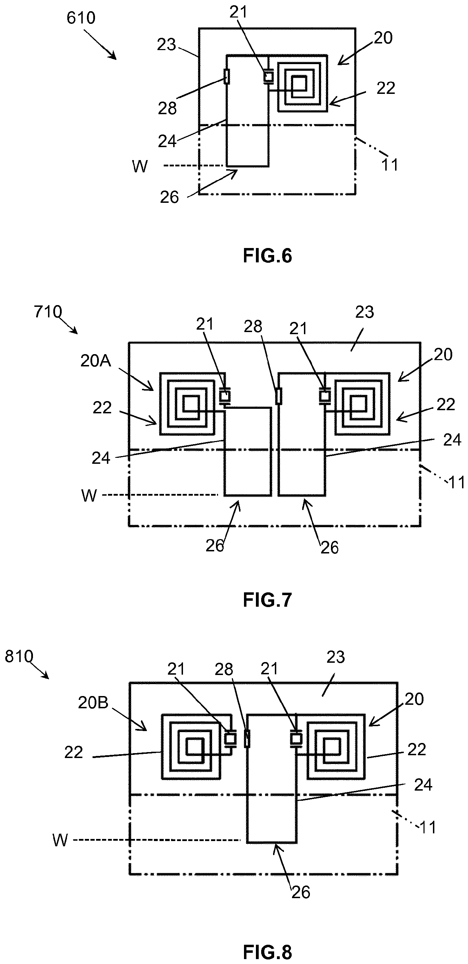

Die Gleitfläche 6 des Gleitelements 4 ist in FIG.6 ebenfalls kreiszylindrisch um die Drehachse A, mit einem kritischen Bereich 8 in dem die Verschleißgrenze W liegt. Ähnlich wie bei FIG.3 ist hier die Funkschaltung 10 am äußeren Umfang der Gleitlagerbuchse 4 angebracht und daher vorzugsweise als flexibles Haftetikett, z.B. als RFID Tag, ausgeführt. Als Antenne 22 kann, insbesondere bei Platzmangel im Fall kleinerer Durchmesser der Gleitlagerbuchse eine Induktionsspule 22 getrennt an der rückwärtigen Scheibenfläche des Flansches der Lagerbuchse vorgesehen werden, wie in FIG.5 schematisch dargestellt. Auch in FIG.5 ist ein gesondertes Detektorelement 26 als Teil einer Leiterschlaufe, z.B. für einen Nebenschluss vorgesehen. Der Wendepunkt der Leiterschlaufe bildet dabei das Detektorelement 26 und liegt in Radialrichtung genau im Abstand der vorbestimmten Verschleißgrenze W von der Gleitfläche 6 entfernt. Der Leiter mit dem Detektorelement 26 kann in einer Bohrung nachträglich angebracht werden, z.B. für selektives Nachrüsten. Der Leiter mit dem Detektorelement 26 kann auch bereits bei der Herstellung der Gleitlagerbuchse 4 mit eingegossen werden, z.B. im Spritzgußverfahren. Die elektrische Verbindung mit dem Transponder der Funkschaltung 10 erfolgt im letzten Fall nur bedarfsweise nach der Herstellung der Gleitlagerbuchse 4, wenn eine berührungslose Überwachung gewünscht wird.

In den Ausführungsbeispielen nach FIG.1A-1E, FIG.2 und FIG.4 sind die Funkschaltungen 10 selbst unmittelbar jeweils in einem kritischen Bereich 8 auf Höhe der Verschleißgrenze W von im Kunststoff-Gleitelement 4, angeordnet. Bei FIG.3 und FIG.5 ist hingegen nur das Detektorelement getrennt an der Verschleißgrenze W vorgesehen. Die Position der Verschleißgrenze W wird empirisch ermittelt, beispielsweise durch Dauerversuche in einem Prüflabor oder durch Modellberechnungen.

FIG.15A-15B zeigen als weiteres Anwendungsbeispiel ein Axial-Radial-Gleitlager 2010, mit einem ersten Lagerring 2011 und einem zweiten Lagerring 2012 aus Metall, z.B. aus Aluminium, oder aus faserverstärktem Kunststoff. Bekannte Aspekte der Bau- und Funktionsweise des Axial-Radial-Gleitlagers 2010 sind in der Patentanmeldung WO 2014/154800 A1 beschrieben auf die insoweit Bezug genommen wird. FIG.15A-15B zeigen Gleitelemente 2004 aus einem Tribopolymer, welche zwischen den Lagerringen 2011, 2012, im Bereich der Aufnahme im zweiten Lagerring 2012, angeordnet sind. Jeweils eine Mehrzahl Gleitelemente 2004 bilden gegenüberliegende Gleitringe, welche die Lagerringe 2011, 2012 axial und radial entkoppeln und Gleitflächen für diese bilden. Zu diesem Zweck haben die Gleitelemente 2004 in der Querschnittsebene nach FIG.15A, jeweils einen näherungsweise L-förmigen Querschnitt mit einem Axialbereich 2021 und etwa senkrechten Radialbereich 2022.

In FIG.15B ist ein Gleitelement 2004 näher dargestellt. Das Gleitelement 2004 unterscheidet sich von bekannten Bauformen zunächst durch eine bei der Herstellung, z.B. im Spritzgussverfahren, bereits vorgeformte Aufnahme 7' im Tribopolymer. Die Aufnahme 7' ist, wie bei den vorstehenden Beispielen auch, an einer verschleißanfälligen Stelle vorgesehen (z.B. zum Lagerring 2011) und anfänglich nach Außen offen. Ferner zeichnet sich das Gleitelement 2004 in FIG.15B erfindungsgemäß durch eine Funkschaltung 10 wie weiter unten beschrieben aus, die in der Aufnahme 7' bodenseitig angeordnet ist. Die Verschleißgrenze W liegt typisch im Bereich von einigen Zehntel d.h. ca. 0,3 bis 0,9mm, insbesondere ca. 0,5 bis 0,7mm. Die Verschleißgrenze W wird einerseits durch die Tiefe der Aufnahme 7' und andererseits durch die Bauhöhe bzw. Dicke der Funkschaltung 10 bestimmt.

Die zur Gleitfläche hin verbleibende freie Öffnung der Aussparung 7' d.h. vor der Funkschaltung 10, ist vorzugsweise mit einer Verschlussmasse 14 aus Kunststoff geschlossen. Hierzu kann z.B. gemäß FIG.15B ein anderer, weniger verschleißfester Kunststoff als der Tribopolymer-Kunststoff des Gleitelements 2004 eingefüllt werden, d.h. die Funkschaltung 10 ist in das Gleitelement stoffschlüssig eingebettet und so zugleich gekapselt. Stoffschlüssiges Einbetten der Funkschaltung 10, zumindest des Detektorelements 26 in den Kunststoff des Gleitelements 4 bzw. 2004 kann auch z.B. durch Umspritzen bzw. Eingießen der Funkschaltung 10 bzw. des Detektorelements 26 bei der Spritzgussherstellung des Gleitelements, durch nachträgliches Anspritzen oder Verfüllen mit einer Vergussmasse, oder z.B. durch ein additives Verfahren wie 3D-Druck oder dgl. erfolgen. Durch die eingebettete Anordnung ist die Lage der Funkschaltung 10 bzw. des Detektorelements 26 dauerhaft festgelegt und die Funkschaltung 10 vor äußeren Einflüssen geschützt.

Das Prinzip zur drahtlosen Verschleißerkennung anhand von Funkschaltungen 10 ist anwendbar auf die Erkennung von Verschleiß bzw. Abnutzung durch reibungsbedingten Abrieb, durch den Betrieb der Gleitlager 1, wie beispielsweise bei gleitenden Gleitlagern 1 (FIG.1). Das Prinzip ist gleichermaßen anwendbar auf die Erkennung von Rissbildung oder Ermüdungsbruch. Alle Arten von Verschleiß können alterungsbedingt durch Materialermüdung oder auch vor Erreichen der Lebenserwartung durch unsachgemäße Beanspruchung auftreten.

Zur Verschleißerkennung ist vorgesehen, dass die Funkschaltung 10 ihr Sendeverhalten in Zusammenwirkung mit einem Transceiver, beispielsweise mit dem RFID-Lesegerät 12, aufgrund mechanischer Beanspruchung verändert. Die Änderung soll erst erfolgen, wenn ein Zustand kritischer Abnutzung am zugeordneten Gleitelement 4 erreicht ist. Der entsprechende Abnutzungsgrad ist, z.B. durch Positionieren, bevorzugt so gewählt, dass ein kritischer Zustand signalisiert wird, bevor das Gleitlager 2 vollständig ausfällt.

FIG.6-8 zeigen mögliche Ausführungsbeispiele von Funkschaltungen 610, 710, 810, insbesondere für den Anwendungsfall nach FIG.3 oder FIG.5, wobei nachfolgend nur deren Aufbau und Funktion erörtert wird. Das Prinzip ist auch auf FIG.1-2 oder FIG.4 übertragbar.

Die Funkschaltungen 610, 710, 810 sind als passive RFID-Transponder ausgeführt zur drahtlosen Kommunikation im UHF-Frequenzbereich des IFM-Bands. Zur möglichst kostengünstigen Herstellung umfassen die RFID-Transponder 20 bzw. 20A-20B nach FIG.6-8 jeweils einen handelsüblichen RFID-Mikrochip 21, hier schematisch als Resonator-Symbol abgebildet, mit dazu passender RFID-Antenne 22.

Der RFID-Mikrochip 21 hat einen Speicher mit Identifikationsinformation und wird jeweils über die RFID-Antenne 22 durch die Sendeleistung des RFID-Lesegeräts 12 versorgt. Die RFID-Transponder 20 bzw. 20A-20B nach FIG.6-8 sind also passiv und besitzen keine eigene gesonderte Stromversorgung.

In FIG.6 sind die Anschlüsse des RFID-Mikrochips 21 an die RFID-Antenne 22 mittels einer Detektorleitung 24 überbrückt bzw. "kurzgeschlossen" oder fehlabgestimmt. Ein Leitungsabschnitt 26 der Detektorleitung 24 ist als Leiterschlaufe im kritischen Bereich 8 so geführt, dass dieser als Detektorelement 26 bei Überschreiten der Verschleißgrenze W bricht, d.h. die Detektorleitung 24 unterbrochen wird. Somit wird die ordnungsgemäße Versorgung des RFID-Mikrochips 21 anhand der RFID-Antenne 22 erst freigegeben, wenn die kritische Verschleißgrenze W überschritten ist. Mit anderen Worten, der RFID-Transponder 20 der Funkschaltung 610 wird erst sendebereit, wenn die zu erkennende Verschleißgrenze W erreicht oder überschritten ist. So kann z.B. erst durch die Unterbrechung eine hinreichende Impedanzanpassung (Engl. impedance matching) bzw. ein Aufheben einer bewussten Fehlabstimmung (Fehlanpassung, Engl. mismatch) bewirkt werden. Zur Vermeidung von induktionsbedingter Beschädigung kann die Detektorleitung 24 mit einem niederohmigen Shunt-Widerstand 28 versehen sein. Der eigentliche RFID-Transponder 20, sowie die Detektorleitung 24 mit ihren Bestandteilen können als Erkennungsmodul auf dem gleichen Träger 23, beispielsweise einem zerbrechlichen Haftetikett befestigt sein, oder beispielsweise in ein sprödes, bruchempfindliches Material eingegossen werden.

FIG.7 ist eine Weiterbildung des Prinzips nach FIG.6 und umfasst zwei RFID-Transponder 20; 20A. Der Transponder 20A funktioniert nach dem umgekehrten Prinzip im Vergleich zum Transponder 20. Beim Transponder 20A wird die Versorgung des RFID-Mikrochips 21 im Falle eines Bruchs des Detektorelements 26 an der Detektorleitung 24 nicht freigegeben, sondern unterbrochen. Der RFID-Transponder 20 wiederum ist identisch zum Transponder 20 aus FIG.6 aufgebaut.

Durch die Kombination nach FIG.7 lässt sich eine höhere Erkennungssicherheit erzielen, indem bei Empfang des ordnungsgemäßen Signals des ersten RFID-Transponders 20A und Ausbleiben des Signals des zweiten RFID-Transponders 20 auf einen betriebsbereiten Zustand ohne übermäßigen Verschleiß geschlossen werden kann. Umgekehrt signalisiert jedoch ein Auftreten des Signals des zweiten RFID-Transponders 20 und Unterbleiben des Signals des ersten RFID-Transponders 20A mit höherer Zuverlässigkeit das Überschreiten der Verschleißgrenze W im kritischen Bereich 8. Dies erfolgt indem zwei unabhängige Leitungsabschnitte als Detektorelemente 26 verschleißbedingt unterbrochen wurden. Auch hier sind Identifikationsinformationen zur Paarung der RFID-Transponder 20A, 20 und deren Zuordnung zum betroffenen Kunststoffgleitelement hinterlegt, z.B. im Lesegerät 12.

In einer nicht gezeigten Variante zu FIG.7 kann - ähnlich wie in FIG.3 - das Detektorelement 26 des einen Transponders 20A, im Vergleich zum Detektorelement 26 des anderen Transponders 20, in Bezug auf die Verschleißgrenze W abgestuft bzw. räumlich versetzt sein um eine Zusatzinformation zum zeitlichen Fortschreiten von Verschleiß und/oder zur Kontrolle zu gewinnen.

FIG.8 zeigt ein weiteres Ausführungsbeispiel mit zwei RFID-Transpondern 20; 20B, wobei ein Transponder 20B lediglich zu Kontrollzwecken als Dauerprobe vorgesehen ist, und sein Sendeverhalten nicht verschleiß- oder abnutzungsabhängig verändert. Der andere RFID-Transponder 20 ist identisch bzw. prinzipgleich zum Transponder 20 gemäß FIG.6-7 ausgeführt. In einer nicht gezeigten Variante zu FIG.8 kann - ähnlich wie in FIG.3 - der Transponder 20B, mit einem Teil seiner Antenne als Sollbruchstelle im kritischen Bereich 8 angeordnet sein, sodass eine weitere, zweite Verschleißgrenze erfassbar ist, z.B. für einen Nothalt.

Geeignete Systeme und Verfahren zur funkbasierten Erfassung von Transpondern sind dem Fachmann aus der Fachliteratur und einschlägigen Normen (z.B. ISO 18000-1 bzw. IEC 18000-6C oder dgl.) bekannt und werden daher nicht näher erläutert.

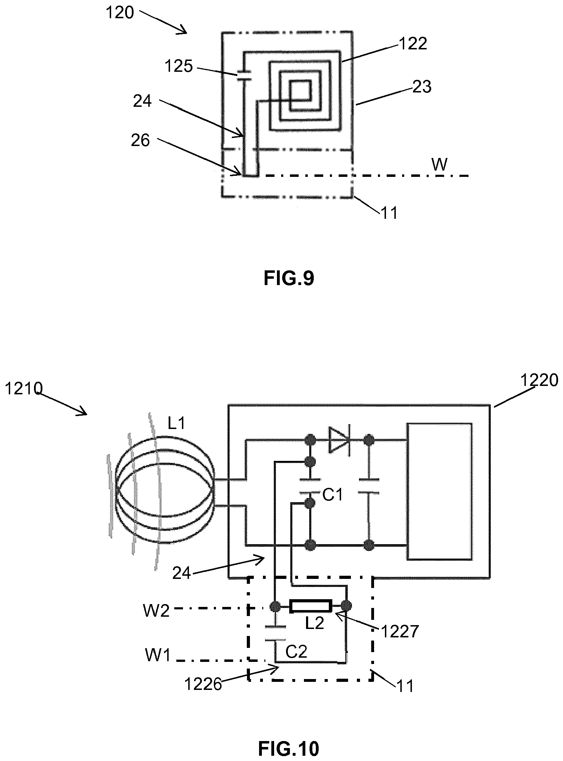

FIG.9 zeigt eine besonders einfache Funkschaltung in Form eines RF-Transponders 120 wobei ein für Warensicherung (EAS: electronic article surveillance) bekannter LC-Schwingkreis modifiziert wurde durch eine Detektorleitung 24 die eine Schlaufe im kritischen Bereich 8 bildet, welche als Detektorelement 26 dient. Im betriebsbereiten Zustand, entzieht der Schwingkreis aus RF-Induktionsantenne 122 und RF-Kondensator 125 einem äußeren elektromagnetischen HF-Feld Sendeenergie. Das HF-Feld ist auf die Resonanzfrequenz des Schwingkreis abgestimmt - typischerweise um 8,2 MHz - und somit ist der RF-Transponders 120 nachweisbar. Zum Verändern des Verhaltens des RF-Transponders 120 unterbricht das Detektorelement 26 die Verbindung zwischen der RF-Induktionsantenne 122 und dem RF-Kondensator 125, wenn die Abnutzung die Verschleißgrenze W überschreitet. Damit wird der Schwingkreis unwirksam und der RF-Transponder 120 ist nicht mehr bei der Resonanzfrequenz nachweisbar. Als Träger 23 kommt insbesondere eine Sonderanfertigung eines Haftetiketts in Betracht, das einen bruchanfälligen kritischen Bereich 8 als Substrat für die das Detektorelement 26 bildende Leiterschlaufe umfasst. Die anderweitigen Merkmale des RF-Transponders 120 können z.B. der Lehre aus US 3,810,147 oder US 3,500,373 entsprechen. Die besonders kostengünstige Bauweise nach FIG.9 ist insbesondere bei sehr hohen Stückzahlen vorteilhaft.

FIG.10 zeigt eine Weiterbildung der RFID-Schaltungen nach FIG.6-8, dahingehend, dass die Funkschaltung 1210 nach FIG.10, im Neuzustand betriebsbereit ist, bei Überschreiten einer ersten Verschleißgrenze W1 nicht betriebsbereit ist und bei Überschreiten einer zweiten Verschleißgrenze W2 wieder betriebsbereit wird. Zum Verändern des Funkverhaltens ist an die Detektorleitung eine Leiter mit einer Parallelschaltung eines Störkondensators C2 und einer Störspule L2 angeschlossen. Als erstes Detektorelement 1226 wirkt eine Leiterschlaufe in Serie zum Störkondensator C2, welche den Störkondensator C2 abkoppelt, wenn die Abnutzung die erste Verschleißgrenze W1 überschreitet. Als zweites Detektorelement 1227 wirkt die Störspule selbst, die durch Abrieb auf der Verschleißgrenze W2 zerstört wird.

Die Parallelschaltung mit L2 und C2 an der Detektorleitung 24 beeinträchtigt aufgrund einer geringen Impedanz von C2 zunächst den Resonanzschwingkreis nur unwesentlich, sodass der RFID-Transponder 1220 im unbeeinträchtigten Neuzustand im Wesentlichen betriebsbereit ist und bei der Resonanzfrequenz Leistung aufnimmt um den RFID-Chip zu versorgen. Nach Trennen der parallelen Verbindung des Störkondensators C2 wirkt nur noch die Störspule L2. Deren Impedanz ist so gewählt, dass der Resonanz-Schwingkreis mit dem Resonanzkondensator C1 und der als Antenne dienenden Resonanzspule (Antenne) L1 verstimmt ist und nicht mehr im Frequenzbereich des Lesegeräts (FIG.1) resonant anspricht. Somit ist der RFID-Transponder 1220 funktionsunfähig in Bezug auf das Lesegerät. Für die Werte der Impedanzen gilt hierbei: (a) C2 << C1 und (b) L2 << L1 * (C1/C2). Erreicht die Abnutzung die zweite Verschleißgrenze W2, wird die Störspule L2 unwirksam und daher die Verstimmung des Schwingungs-Tilgers wieder aufgehoben. Damit wird der RFID-Transponder 1220 wieder bestimmungsgemäß betriebsfähig.

Eine mehrstufig gestaffelte Detektoranordnung wie in FIG.3 oder FIG.10 hat den Vorteil, dass das System zu Beginn über das Lesegerät 12 eine Funktionsprüfung erlaubt und vor allem vollautomatisch konfiguriert werden kann, indem es selbsttägig die Identifikationsinformationen aller vorhandenen Funkschaltungen 1210 aufnimmt. Bleibt die Rücksendung einer zuvor erfassten Identifikationsinformation im späteren Betrieb aus, ist auf Überschreiten einer Verschleißgrenze im entsprechenden Gleitelement 4 zu erkennen.

FIG.10 hat den weiteren Vorteil, dass - ohne Vervielfachung der Funkschaltungen 1210 - zuverlässig von einem überkritischen Verschleiß ausgegangen werden kann, wenn die betroffene Identifikationsinformation nach einem gewissen Zeitintervall erneut wieder erfasst wird. Vorzugsweise wird ein Notstopp ausgelöst, da die abgenutzte Leitungsführung noch nicht erneuert bzw. repariert wurde.

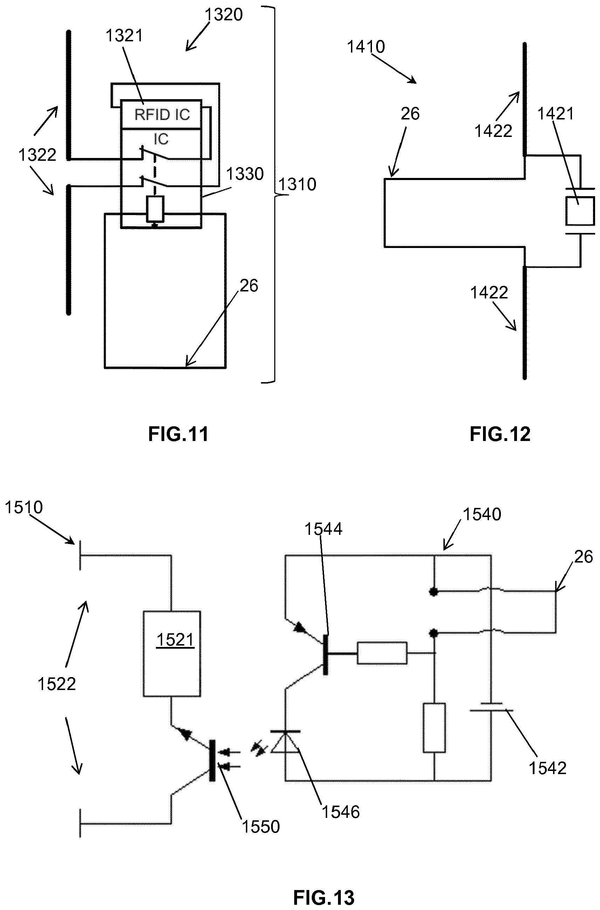

FIG.11-FIG.13 zeigen weitere Ausführungsbeispiele von Funkschaltungen 1310; 1410; 1510 für RFID-ICs mit Dipolantennen für den UHF-Frequenzbereich, z.B. nach ISO 18000-6C. Diese bieten u.a. eine höhere Reichweite als LF- oder RF-Funkschaltungen (z.B. nach FIG.6-8 oder FIG.9) und sind auch als passive Erkennungsmodule günstig herstellbar. Die Wirkweise und Anordnung an der Leitungsführung entspricht z.B. einem der vorstehenden Beispiele.

In der Funkschaltung 1310 nach FIG.11 ist eine Dipolantenne 1322 über einen speziellen IC 1330 (integrierter Schaltkreis), z.B. ein ASIC, so schaltbar, dass sie von der RFID-Schaltung 1321 in der Art eines Schaltrelais galvanisch getrennt oder mit dieser verbunden werden kann. Hierzu hat der IC 1330 eine Transistoranordnung, welche beide Knoten der Dipolantenne 1322 verbindet, wenn eine als Detektorelement genutzte Leiterschlaufe durchtrennt wird. Das Detektorelement ist mit Anschlüssen des IC 1330 verbunden, welche die relaisähnliche Transistoranordnung steuern. Die RFID-Schaltung 1321 kann als integrierter Bestandteil des ICs 1330 ausgeführt sein. Die Funkschaltung 1310 kann aktiv sein, d.h. mit einer Versorgung verbunden sein, oder ggf. auch passiv über die Dipolantenne 1322 aus der Funkleistung versorgt werden.

In FIG.12 ist eine Dipolantenne 1422 mit einer als Detektorelement 26 verwendeten Leiterschlaufe gebrückt. Hierdurch werden die Leistungsparameter der Dipolantenne 1422 auf messbare Weise beeinfluss, so dass ein Auftrennen des Detektorelements 26 durch Verschleiß anhand eines geeigneten Lesegeräts (vgl. FIG.1 bzw. FIG.4) erkennbar ist. Im UHF-Frequenzbereich führt ein "Kurzschluss" (anders als bei einer Induktionsantenne nach FIG.6) nicht unter allen Bedingungen zwingend zum Ausfall des Funksignals, aber zu einer nachweisbaren Parameterveränderung im Funkverhalten, das der RFID-Chip 1421 mit der Dipolantenne 1422 bewirkt. Die Funkschaltung 1410 nach FIG.11 eignet sich als rein passives System.

In der Funkschaltung 1510 nach FIG.13 ist ebenfalls eine Dipolantenne 1522 an einen RFID-Chip 1521 angeschlossen. Eine aktive Detektorschaltung 1540 mit einer Spannungsquelle 1542 umfasst als Detektorelement 26 auch hier eine durch Verschleiß trennbare Leiterschlaufe zur Anordnung in einem verschleißkritischen Bereich. Wenn das Detektorelement 26 aufgetrennt wird, schaltet der pnp-Transistor 1544 auf Durchgang, sodass die LED 1546 Licht erzeugt und, in Art eines Optokopplers, den NPN-Fototransistor 1550 schaltet, sodass die Dipolantenne 1522 an beiden Anschlüssen des RFID-Chips 1521 niederohmig verbunden ist. Es kann hierzu auch ein herkömmlicher Optokoppler verwendet werden. Bei einer Unterbrechung im Detektorelement 26 schaltet die Detektorschaltung 1540 somit die Verbindung der Dipolantenne 1522 mit dem RFID-Chip 1521 frei, d.h. den RFID-Chip 1521 in Betriebsbereitschaft. Die Funkschaltung 1510 ist als aktives System geeignet, wobei die Spannungsquelle 1542 auch den RFID-Chip 1521 versorgen kann (nicht gezeigt).

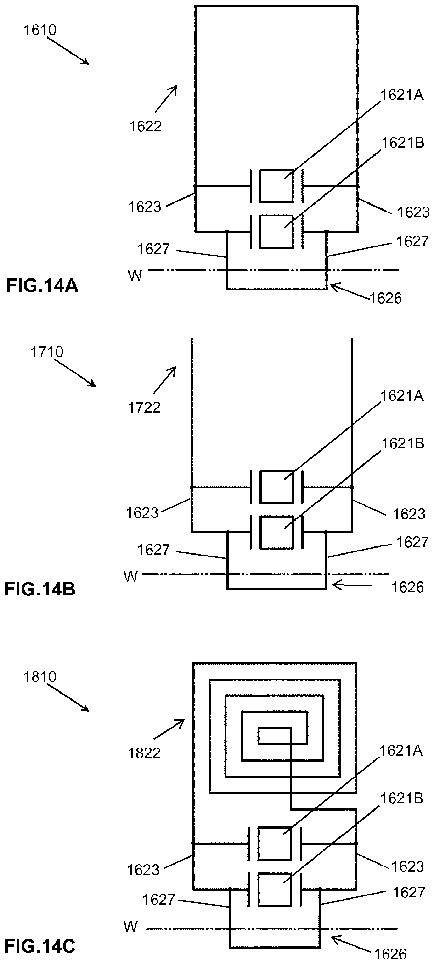

FIG.14A-14C zeigen drei weitere Ausführungsbeispiele von Funkschaltungen 1610; 1710; 1810, die sich von den vorstehenden Beispielen insbesondere dadurch unterscheiden, dass der Transponder bei jedem Ausführungsbeispiel jeweils zwei RFID-Chips 1621A, 1621B aufweist, die beide mit einer einzigen gemeinsamen Antenne <1622; 1722; 1822> verbunden sind.

In den Funkschaltungen 1610; 1710; 1810 ist im Neuzustand und bis zum kritischen Verschleiß, z.B. bei Überschreitung der Verschleißgrenze W, zunächst nur der erste RFID-Chip 1621A empfangs- und sendebereit. Erst wenn das Detektorelement 1626 durch übermäßigen Verschleiß, z.B. wegen mechanischem Abrieb über die Verschleißgrenze W hinaus, aufgetrennt bzw. entfernt wird, ist auch der zweite RFID-Chip 1621B praktisch empfangs- und sendebereit. Die Kennungen bzw. Identifikationsinformationen der RFID-Chips 1621A, 1621B unterscheiden sich jedoch voneinander. Somit erlaubt der erste RFID-Chip 1621A zunächst eine Funktionsüberprüfung der Funkschaltungen 1610; 1710; 1810 z.B. dahingehend, ob die Verschleisserkennung vorgesehen und/oder betriebsbereit ist. Diese Überprüfung erfolgt anhand der vorbekannten Kennung des ersten RFID-Chips 1621A. Diese wird vom Lesegerät empfangen, und ist z.B. in einer Datenbank hinterlegt. Diese Kennung kann auch anderweitig, z.B. zu Logistikzwecken oder für eine Erkennung der Systemkonfiguration, genutzt werden.

Der erste RFID-Chip 1621A kann leitend (galvanisch) oder induktiv mit der Antenne 1622; 1722 bzw. 1822 verbunden sein. Die Funkschaltungen 1610; 1710 bzw. 1810 können insbesondere als PCB oder als FPC realisiert sein, wobei die Antennen 1622; 1722 bzw. 1822 als Leiterbahnen ausgeführt sind. Die verwendeten RFID-Chips 1621A, 1621B sind zur Systemvereinfachung vorzugsweise baugleich und geeignete handelsübliche integrierte Schaltungen (ICs), vorzugsweise in SMD- bzw. für SMT-Technik.

Der zweite RFID-Chip 1621B ist in FIG.14A-14C über eine Übertragungsleitung 1623 mit der gemeinsamen Antenne 1622; 1722 bzw. 1822 leitend verbunden. Zur verschleißbedingten Veränderung des Funkverhaltens des zweiten RFID-Chips 1621B ist parallel an der Übertragungsleitung 1623 eine Blindleitung bzw. Stichleitung 1627 (engl. "stub") leitend angeschlossen. Die Stichleitung 1627 dient als Detektorleitung und ist im gezeigten Beispiel als Zweidrahtleitung, z.B. ähnlich einem sog. "single shunt stub tuner", ausgeführt und über einen im kritischen Bereich liegenden Leiterabschnitt kurzgeschlossen (KS-Stichleitung). Dieser Leiterabschnitt im kritischen Bereich bildet das Detektorelement 1626, wie in FIG.14A-14C gezeigt. Die Stichleitung 1627 kann alternativ offen bzw. leerlaufend sein (LL-Stichleitung nicht gezeigt), jedoch mit im kritischen Bereich exponierten Leiterabschnitten, die bei übermäßigen Verschleiß über die Verschleißgrenze W hinaus abgetrennt werden, um als Detektorelement 1626 zu dienen. Wenngleich die Bauweise nach FIG.14A-14C besonders einfach ist, liegt z.B. auch eine Doppel-Stichleitung (analog zum sog. "Double Shunt Stub Tuner") oder ein ausgeprägtes Anpassungsnetzwerk im Rahmen der Offenbarung.

Die Leiterbahnabmessungen des Abschnitts, der das Detektorelement 1626 bildet, und die Leiterbahnabmessungen der nach übermäßigem Verschleiß verbleibenden Leiterbahnabschnitte der Stichleitung 1627 sind dabei in einem vorbestimmten Verhältnis eingestellt. Die Einstellung erfolgt einerseits so, dass im Neuzustand eine hinreichende Fehlanpassung, insbesondere Impedanz-Fehlanpassung, die Empfangs- und Sendebereitschaft des zweiten RFID-Chips 1621B so stark stört, dass dieser nicht effektiv mit dem Lesegerät kommunizieren kann. Insbesondere kann die Stichleitung 1627 mit dem Detektorelement 1626 die passive Versorgung und/oder Sendeleistung des RFID-Chips 1621B zu einem hinreichenden Grad verschlechtern. Andererseits kann das Verhältnis zudem so eingestellt sein, dass nach Abtrennen des Detektorelements 1626 eine hinreichende Anpassung, insbesondere Impedanz-Anpassung, der Übertragungsleitung 1623, welche die Antenne 1622; 1722 bzw. 1822 mit dem zweiten RFID-Chip 1621B verbindet, vorliegt. Die Stichleitung 1627 kann im Zustand ohne das Detektorelement 1626 bzw. ohne leitende Verbindung hierzu insbesondere zur weitgehenden Leitungsanpassung bzw. Impedanz-Anpassung in Bezug auf die zusätzliche Übertragungsleitung 1623 am zweiten RFID-Chip 1621B führen. Als weiterer Parameter kann entsprechend diesen Vorgaben auch die Position des Anschlusspunkts der Stichleitung 1627 an der Übertragungsleitung 1623 selbst eingestellt sein. Die verschleißbedingte Veränderung der Impedanz-Anpassung (Engl. "deterioration-dependent change in impedance-matching") erfolgt hierbei in Bezug auf die zusätzliche Übertragungsleitung 1623 zwischen Antenne 1622; 1722; 1822 und dem zweiten RFID-Chip 1621B. Die absoluten Leitungslängen von Stichleitung 1627 und Detektorelement 1626 sind über einen gewissen Bereich einstellbar, weil sich die Verhältnisse im Wesentlichen periodisch mit der halben Betriebswellenlänge wiederholen. Eine Verlängerung um n*λ/2 (mit n ganzzahlig) ist bei im Wesentlichen gleichbleibendem Verhalten möglich.

Ohne an eine bestimmte Theorie gebunden zu sein, kann die Reflexion am Anschlusspunkt der Stichleitung 1627 in Bezug auf den ersten RFID-Chip 1621A durch geeignete Wahl der Gesamtlänge der Übertragungsleitung 1623 und der Position von deren Anschlusspunkt an die Stichleitung 1627 so eingestellt werden, dass das Sendeverhalten des ersten RFID-Chips 1621A von der verschleißbedingten Zustandsänderung nicht relevant beeinträchtigt ist, sodass z.B. die Reichweite bzw. Sendeleistung des ersten RFID-Chips 1621A im Neuzustand und im kritischen Verschleisszustand nur unwesentlich verändert ist. Ungeachtet dessen kann (analog zum Prinzip nach FIG.7) alternativ vorgesehen sein, dass bei kritischem Verschleiß der zweite RFID-Chip 1621B empfangs- und sendebereit ist, und der erste RFID-Chip 1621A praktisch ausfällt, was ebenfalls eine Funktionsüberprüfung im unkritischen Zustand erlaubt.

Bei Verschleiß nahe bzw. an der Verschleißgrenze W wird der zweite RFID-Chip 1621B wegen der, bedingt durch Wegfall der Störung bzw. Fehlanpassung aufgrund des Detektorelements 1626, eintretenden Anpassung empfangs- und sendebereit. Somit kann das Lesegerät die Kennung des zweiten RFID-Chips 1621B empfangen, was den Rückschluss auf kritischen Verschleiß ermöglicht. Auch die vorbekannte Kennung des zweiten RFID-Chips 1621B kann hierzu gespeichert z.B. in einer Datenbank hinterlegt sein.

Das Detektorelement 1626 ist in einem räumlich von den RFID-Chips 1621A, 1621B und der gemeinsamen Antenne 1610; 1710 bzw. 1810 getrennten Bereich, z.B. an einem der Antenne 1610; 1710 bzw. 1810 gegenüberliegenden Ende des PCB bzw. FCB und ggf. rückseitig angeordnet.

Die Ausführungsbeispiele nach FIG.14A-14C eignen sich besonders für Transponder bzw. RFID-Chips 1621A, 1621B im Hochfrequenzbereich z.B. bei UHF, insbesondere für UHF-RFID, z.B. mit einer Grundfrequenz von 865MHz bis 955MHz oder 2.4 GHz (mit Wellenlängen im Dezimeterbereich). Das Prinzip der verschleißbedingten Veränderung der Leitungsanpassung bei der Grundfrequenz als Detektionsprinzip ist analog auf die Ausführungsbeispiele nach FIG.6-13 übertragbar. Mit leerlaufenden oder kurzgeschlossenen Stichleitungen geeignet gewählter Länge können grundsätzlich induktive oder kapazitive Blindwiderstände quasi von Null bis Unendlich eingestellt werden. Die Dimensionierung der Leiterbahnabmessungen des Detektorelements 1626 und der Stichleitung 1627 und die Bestimmung des Anschlusspunkts kann z.B. mithilfe des Smith-Diagramms in an sich bekannter Weise erfolgen.

Die Funkschaltungen 1610; 1710; 1810 nach FIG.14A-14C unterscheiden sich untereinander durch die Art der verwendeten Antenne. Die Funkschaltung 1610 in FIG.14A hat eine Schleifendipol-Antenne 1622, die Funkschaltung 1710 in FIG.14B hat eine DipolAntenne 1722. Letztere bieten eine platzsparende Bauweise. Die Funkschaltung 1810 in FIG. 14C hat eine Antennenspule 1822 für ggf. höhere Reichweite. Die Antennen 1622; 1722; 1822 sind jeweils passend zur gewählten Grundfrequenz bzw. den gewählten RFID-Chips 1621A, 1621B dimensioniert.

Abschließend ist anzumerken, dass RFID-Transponder mit IC und Informationsspeicher, anders als 1-Bit-Transpondern (vgl. FIG.9), intelligentere Systeme ermöglichen, die u.a. eine Bestimmung der bzw. des betroffenen Gleitlagers 2 in komplexeren Anlagen, eine nähere Lokalisierung des verschlissenen Kunststoffgleitelements 4, und beispielsweise auch die Verwendung mehrerer Detektorelemente an einem RFID-Chip (nicht gezeigt) erlauben, z.B. zur zuverlässigeren Erkennung. Auch die Funktionsprüfung, z.B. nach FIG.7 oder FIG.14A-14C, wird durch eindeutig zuordenbare Identifikationsinformation ermöglicht.

**Bezugszeichenliste**

| | |
|---|---|
| FIG.1A-1E | FIG. 4 |
| 2 Gleitlager | 3 erstes Bauteil |
| 3 erstes Bauteil | 4 Kunststoff-Gleitelement |
| 4 Kunststoff-Gleitelement | 10 Funkschaltung |
| 5 zweites Bauteil | W Verschleißgrenze |
| 6 Gleitfläche | |
| 7 Aussparung | FIG.5 |
| 8 kritischer Bereich | 4 Kunststoff-Gleitelement |
| 9 belastetes Segment | 6 Gleitfläche |
| 10 Funkschaltung | 8 kritischer Bereich |
| 12 RFID-Lesegerät | 10 Funkschaltung |
| A Achse | 22 Antenne |
| W Verschleißgrenze | 26 Detektorelement |
| | W Verschleißgrenze |
| FIG.2 | A Achse |
| 4 Kunststoff-Gleitelement | |
| 5 zweites Bauteil | FIG.6-8 |
| 6 Gleitfläche | 8 kritischer Bereich |
| 7 Aussparung | 20, 20A, 20B RFID-Transponder |
| 8 kritischer Bereich | 21 RFID-Mikrochip |
| 10 Funkschaltung | 22 RFID-Antenne |
| W Verschleißgrenze | 23 Träger |
| | 24 Detektorleitung |
| FIG.3 | 26 Detektorelement |
| 4 Kunststoff-Gleitelement | 28 Shunt-Widerstand |
| 5 zweites Bauteil | 610, 710, 810 Funkschaltung |
| 6 Gleitfläche | W Verschleißgrenze |
| 7 Aussparung | |
| 8 kritischer Bereich | FIG. 9 |
| 10 Funkschaltung | 8 kritischer Bereich |
| 24 Detektorleitung | 24 Detektorleitung |
| 26 Detektorelement | 26 Detektorelement |
| W Verschleißgrenze | 120 RF-Transponder |
| | 122 RF-Induktionsantenne |
| FIG. 4 | 125 RF-Kondensator |
| 3 erstes Bauteil | 23 Träger |
| 4 Kunststoff-Gleitelement | W Verschleißgrenze |
| 10 Funkschaltung | |
| W Verschleißgrenze | FIG.10 |
| | 24 Detektorleitung |
| | 1210 Funkschaltung |
| 1221 RFID-Chip | |
| 1226, 1227 Detektorelemente | FIG.15A-15B |
| 1220 RFID-Transponder | 7' Aufnahme |
| C1 Resonanzkondensator | 10 Funkschaltung |
| L1 Resonanzspule (Antenne) | 14 Kunststoff-Verschlussmasse |
| C2 Störkondensator | 2004 Tribopolymer-Gleitelement |
| L2 Störspule | 2010 Axial-Radial-Gleitlager |
| W1, W2 Verschleißgrenzen | 2011, 2012 Lagerringe |
| | 2021 Axialbereich |
| FIG.11 | 2022 Radialbereich |
| 26 Detektorelement | W Verschleißgrenze |
| 1310 Funkschaltung | |
| 1321 RFID-Chip | |
| 1320 RFID-Transponder | |
| 1322 Dipolantenne | |
| 1330 IC | |
| | |
| FIG.12 | |
| 26 Detektorelement | |
| 1410 Funkschaltung | |
| 1421 RFID-Chip | |
| 1422 Dipolantenne | |
| | |
| FIG.13 | |
| 26 Detektorelement | |
| 1510 Funkschaltung | |
| 1521 RFID-Chip | |
| 1522 Dipolantenne | |
| 1540 Detektorschaltung | |
| 1542 Spannungsquelle | |
| 1544 Transistor (PNP) | |
| 1546 LED | |
| 1550 Fototransistor (NPN) | |
| | |
| FIG.14A-14C | |
| 1610; 1710; 1810 Funkschaltung | |
| 1621A RFID-Chip | |
| 1621B RFID-Chip | |
| 1622; 1722; 1822 Antenne | |
| 1623 Übertragungsleitung | |
| 1626 Detektorelement | |
| 1627 Stichleitung | |

## Patentansprüche

1. Gleitlager (2) zur schmiermittelfreien Lagerung, mit einem ersten Bauteil (3) umfassend mindestens ein Gleitelement (4) aus Kunststoff, welches eine Gleitfläche (6) aufweist zur beweglichen Führung eines zweiten Bauteils (5) relativ zum ersten Bauteil, wobei das erste Bauteil (3) eine Vorrichtung aufweist zur Erkennung von Verschleiß in einem kritischen Bereich (8) des mindestens einen Gleitelements (4) aus Kunststoff, insbesondere an dessen Gleitfläche, mit einer Funkschaltung (10)und mit einem Detektorelement (26), das mit der Funkschaltung zusammenwirkt und das am Gleitelement (4) angeordnet ist, wobei das Detektorelement bei einem vorbestimmten Ausmaß von Verschleiß im kritischen Bereich das Verhalten der Funkschaltung ändert, sodass die verschleißbedingte Änderung drahtlos erkennbar ist, wobei das Detektorelement (26) von der Funkschaltung räumlich getrennt in einer mit dem Gleitelement aus Kunststoff vorgefertigten Aufnahme oder Aussparung im Gleitelement (4) angeordnet und mit der Funkschaltung (10) über eine Detektorleitung (24) elektrisch verbunden ist, nämlich durch eine elektrische Verbindung für selektives Nachrüsten bzw. zum bedarfsweise nachträglichen Verbinden, und wobei die am ersten Bauteil (3) angeordnete Funkschaltung (10) von der Gleitfläche entfernt und außerhalb des kritischen Bereichs des Gleitelements (4) vorgesehen ist.

2. Gleitlager nach Anspruch 1, **dadurch gekennzeichnet, dass** das Gleitelement (4) eine Aussparung (7) in der Gleitfläche (6) aufweist, in welcher das Detektorelement (26) angeordnet ist; oder
dass das Gleitelement (4) eine Aufnahme (7') in der Gleitfläche (6) aufweist, in welcher das Detektorelement (26)eingebettet ist, insbesondere stoffschlüssig eingebettet ist.

3. Gleitlager nach Anspruch 1 oder 2, **dadurch gekennzeichnet, dass** die Funkschaltung (10) ein passiver oder aktiver Transponder (20; 20A; 20B, 120 ... 1320) ist.

4. Gleitlager nach Anspruch 1 oder 2, **dadurch gekennzeichnet, dass** im ersten Bauteil (3) eine Anzahl Gleitelemente (4) vorgesehen sind, und mehrere Gleitelemente jeweils ein Detektorelement (26) aufweisen, und die Detektorelemente mit einer gemeinsamen Funkschaltung (10), insbesondere einem gemeinsamen Transponder, vorzugsweise einem RFID-Transponder mit Mikrochip (21; 1221; 1321; 1421; 1521), verbunden sind.

5. Gleitlager nach Anspruch 3, **dadurch gekennzeichnet,**
- **dass** das Detektorelement (26) als Leitungsabschnitt einer Detektorleitung (24), insbesondere als Leiterabschnitt, ausgeführt ist, der im kritischen Bereich (8) verläuft und bei dem vorbestimmten Ausmaß von Verschleiß unterbrochen wird; oder
- **dass** das Detektorelement (26) als passive Schaltungskomponente ausgeführt ist.

6. Gleitlager nach Anspruch 5, **dadurch gekennzeichnet, dass** der Transponder eine Antenne (22; 1422) umfasst, welche über das Detektorelement (26) kurzgeschlossen oder fehlangepasst ist und dass das Detektorelement bei dem vorbestimmten Ausmaß von Verschleiß den Kurzschluss der Antenne öffnet bzw. die Fehlanpassung aufhebt.

7. Gleitlager nach einem der Ansprüche 1 bis 3, **dadurch gekennzeichnet, dass** die Funkschaltung (10, 610, 710, 810 ... 1510), insbesondere der Transponder, eine Antenne (22; 122) umfasst, und das Detektorelement (26) als ein Teil der Antenne ausgeführt ist der bei dem vorbestimmten Ausmaß von Verschleiß unterbrochen wird.

8. Gleitlager nach einem der Ansprüche 1 bis 7, **dadurch gekennzeichnet, dass** die Funkschaltung (10, 610, 710, 810 ... 1510) als passiver RFID-Transponder (20, 20A, 20B; 1220; 1320) ausgeführt ist, mit einem Mikrochip (21; 1321; 1421) der eine Identifikationsinformation speichert.

9. Gleitlager nach einem der Ansprüche 1 bis 8, **dadurch gekennzeichnet, dass** der kritische Bereich (8) eine vorgegebene Sollbruchstelle des Gleitelements (4) bildet, welche bei dem vorbestimmten Ausmaß von Verschleiß das Detektorelement (26) auslöst.

10. Gleitlager nach einem der Ansprüche 1 bis 9, **dadurch gekennzeichnet, dass** das erste Bauteil (3), mit Ausnahme der Vorrichtung zur Erkennung von Verschleiß, überwiegend oder ausschließlich Bestandteile aus Kunststoff umfasst, wobei vorzugsweise das erste Bauteil aus dem mindestens einen oder mehreren Gleitelementen (4), gegebenenfalls einem Lagergehäuse, und aus der Vorrichtung (10... 1510) zur Erkennung von Verschleiß besteht.

11. Gleitlagerung umfassend ein Gleitlager (2) nach einem der Ansprüche 1 bis 10, ferner umfassend das zweite Bauteil (5), insbesondere eine Welle, eine Schiene, oder einen Gelenkkopf, insbesondere aus Metall.

12. Gleitlagerung nach Anspruch 11, wobei das Gleitlager (2) als Drehlager, Linearführung, Axial-Radial-Lager oder als Gelenklager ausgeführt ist, welches das zweite Bauteil mit entsprechendem Freiheitsgrad bzw. mit entsprechenden Freiheitsgraden lagert.

13. Gleitlagerbuchse (4) aus einem tribologischen Kunststoff für ein Gleitlager zur schmiermittelfreien Lagerung, umfassend einen Transponder (20; 20A; 20B, 120 ... 1320) und ein Detektorelement (26) in einem gegenüber Verschleiß, insbesondere durch festkörperreibungsbedingte Abnutzung, anfälligen kritischen Bereich (8) der Gleitlagerbuchse (4), wobei das Detektorelement (26) bei einem vorbestimmten Ausmaß von Verschleiß im kritischen Bereich das Verhalten des Transponders (20; 20A; 20B, 120 ... 1320) ändert, und wobei der Transponder und das Detektorelement (26) in der Gleitlagerbuchse (4) eingebettet sind und der Transponder gemeinsam mit dem Detektorelement auf einem selbstklebenden Haftetikett realisiert ist.

14. Gleitlagerbuchse (4) nach Anspruch 13 und gemäß den kennzeichnenden Merkmalen nach Anspruch 3 und/oder einem der Ansprüche 5 bis 10.

## Claims

1. A plain bearing (2) for a lubricant-free bearing arrangement, having
a first component (3) comprising at least one sliding element (4) made of plastics material, which has a sliding surface (6) for movably guiding a second component (5) relative to the first component, wherein the first component (3) has a device for detecting wear in a critical region (8) of the at least one sliding element (4) made of plastics material, in particular at a sliding surface thereof, including a radio circuit (10) and a detector element (26), which cooperates with the radio circuit and is arranged on the sliding element (4), wherein the detector element changes the behaviour of the radio circuit (10) at a predetermined degree of wear in the critical region, such that the wear-induced change is wirelessly detectable, wherein the detector element (26) is arranged spatially separated from the radio circuit and in a receptacle or recess in the sliding element (4), which is prefabricated with the sliding element made of plastics material, and the detector element (26) is electrically connected to the radio circuit (10) via a detector line (24), namely by an electrical connection for selective retrofitting or for subsequent connection as required, and wherein the radio circuit (10), which is arranged on the first component (3), is arranged remote from the sliding surface and outside the critical area of the sliding element (4).

2. The plain bearing as claimed in claim 1, **characterized in that** the sliding element (4) has a recess (7) in the sliding surface (6), in which the detector element (26) is arranged; or
**in that** the sliding element (4) has a receptacle (7') in the sliding surface (6) in which the detector element (26) is embedded, in particular embedded in bonded manner.

3. The plain bearing as claimed in claim 1 or 2, **characterized in that** the radio circuit (10) is a passive or active transponder (20; 20A; 20B, 120 ... 1320) .

4. The plain bearing as claimed in claim 1 or 2, **characterized in that** in the first component (3) a number of sliding elements (4) are provided, and a plurality of the sliding elements in each case have a detector element (26), and the detector elements are connected with a common radio circuit (10), in particular with a common transponder, preferably an RFID transponder with microchip (21; 1221; 1321; 1421; 1521).

5. The plain bearing as claimed in claim 3, **characterized in**
- **that** the detector element (26) is embodied as a line portion of a detector line (24), in particular as a conductor portion, which extends in the critical region (8) and is interrupted when the predetermined degree of wear is reached; or
- **that** the detector element (26) is embodied as a passive circuit component.

6. The plain bearing as claimed in claim 5, **characterized in that** the transponder comprises an antenna (22; 1422) which is short-circuited or mismatched via the detector element (26) and **in that** the detector element opens the short circuit of the antenna or cancels the mismatch when the predetermined degree of wear is reached.

7. The plain bearing as claimed in one of claims 1 to 3, **characterized in that** the radio circuit (10, 610, 710, 810 ... 1510), in particular the transponder, comprises an antenna (22; 122), and that the detector element (26) is embodied as part of the antenna which is interrupted when the predetermined degree of wear is reached.

8. The plain bearing as claimed in one of claims 1 to 7, **characterized in that** the radio circuit (10, 610, 710, 810 ... 1510) is embodied as a passive RFID transponder (20, 20A, 1220; 1320), with a microchip (21; 1321; 1421) which stores identification information.

9. The plain bearing as claimed in one of claims 1 to 8, **characterized in that** the critical region (8) forms a defined predetermined breaking point of the sliding element (4), which triggers the detector element (26) when the predetermined degree of wear is reached.

10. The plain bearing as claimed in one of claims 1 to 9, **characterized in that** the first component (3), with the exception of the device for detecting wear, predominantly or exclusively comprises component parts made of plastics material, wherein preferably the first component consists of the at least one or more sliding elements (4), optionally a bearing housing, and of the device (10 ... 1510) for detecting wear.

11. A plain bearing arrangement comprising a plain bearing (2) as claimed in one of claims 1 to 10, further comprising the second component (5), in particular a shaft, a rail, a joint head, in particular made of metal.

12. The plain bearing arrangement as claimed in claim 11, wherein the plain bearing (2) is embodied as a pivot bearing, linear guide, axial-radial bearing or a spherical plain bearing, which mounts the second component with a corresponding degree of freedom or with corresponding degrees of freedom.

13. A plain bearing bush (4) of tribological plastics material for a plain bearing for a lubricant-free bearing arrangement, comprising a transponder (20; 20A; 20B, 120 ... 1320) and the detector element (26) in a critical region (8) of the plain bearing bush (4) which is susceptible to wear, in particular by solid friction-induced deterioration, wherein the detector element (26) changes the behavior of the transponder (20; 20A; 20B, 120 ... 1320) when a predetermined degree of wear is reached in the critical region, and wherein the transponder and the detector element (26) are embedded in the plain bearing bush (4) and the transponder is implemented together with the detector element on a self-adhesive label.

14. The plain bearing bush (4) as claimed in claim 13 and according to the characterizing features as claimed in claim 3 and/or one of the claims 5 to 10.

## Revendications

1. Palier lisse (2) pour un support sans lubrifiant, avec un premier composant (3) comprenant au moins un élément coulissant (4) en matière plastique, qui présente une surface de coulissement (6) pour le guidage mobile d'un deuxième composant (5) par rapport au premier composant, dans lequel le premier composant (3) comprend un dispositif pour détecter l'usure dans une zone critique (8) de l'au moins un élément coulissant (4) en matière plastique, en particulier sur sa surface de coulissement, avec un circuit radio (10) et avec un élément détecteur (26) qui coopère avec le circuit radio et qui est disposé sur l'élément coulissant (4), l'élément détecteur modifiant le comportement du circuit radio dans la zone critique au niveau d'usure prédéterminé, de sorte que la modification liée à l'usure peut être détectée sans fil, l'élément détecteur (26) étant disposé, séparé spatialement du circuit radio, dans un logement ou un évidement dans l'élément coulissant (4) préfabriqué avec l'élément coulissant en matière plastique et étant relié électriquement au circuit radio (10) par une ligne de détection (24), à savoir par une liaison électrique pour un montage ultérieur sélectif ou pour une connexion ultérieure si nécessaire, et le circuit radio (10) disposé sur le premier composant (3) étant éloigné de la surface de coulissement et prévu en dehors de la zone critique de l'élément de coulissement (4).

2. Palier lisse selon la revendication 1, **caractérisé en ce que** l'élément coulissant (4) présente un évidement (7) dans la surface de coulissement (6) dans lequel est disposé l'élément détecteur (26);
ou
**en ce que** l'élément coulissant (4) présente un évidement (7') dans la surface de coulissement (6) dans lequel l'élément détecteur (26) est encastré, en particulier est encastré avec verrouillage de matière.

3. Palier lisse selon la revendication 1 ou 2, **caractérisé en ce que** le circuit radio (10) est un transpondeur passif ou actif (20; 20A; 20B, 120 ... 1320).

4. Palier lisse selon la revendication 1 ou 2, **caractérisé en ce que** plusieurs éléments coulissants (4) sont prévus dans le premier composant (3) et plusieurs éléments coulissants présentent chacun un élément détecteur (26) et les éléments détecteurs sont reliés à un circuit radio commun (10), en particulier un transpondeur commun, de préférence un transpondeur RFID avec une micropuce (21; 1221; 1321; 1421; 1521).

5. Palier lisse selon la revendication 3, **caractérisé en ce que**
- l'élément détecteur (26) est conçu comme une section de ligne d'une ligne de détection (24), en particulier comme une section de conducteur, qui s'étend dans la zone critique (8) et est interrompue au niveau d'usure prédéterminé;
ou
- **en ce que** l'élément détecteur (26) est conçu comme un composant de circuit passif.

6. Palier lisse selon la revendication 5, **caractérisé en ce que** le transpondeur comprend une antenne (22; 1422) qui est court-circuitée ou désadaptée par l'intermédiaire de l'élément détecteur (26) et **en ce que** l'élément détecteur ouvre le court-circuit de l'antenne ou annule la désadaptation, respectivement, au niveau d'usure prédéterminé.

7. Palier lisse selon l'une des revendications 1 à 3, **caractérisé en ce que** le circuit radio (10, 610, 710, 810 ...1510), en particulier le transpondeur, comprend une antenne (22; 122) et l'élément détecteur (26) est conçu comme une partie de l'antenne qui est interrompue au niveau d'usure prédéterminé.

8. Palier lisse selon l'une quelconque des revendications 1 à 7, **caractérisé en ce que** le circuit radio (10, 610, 710, 810 ... 1510) est réalisé sous la forme d'un transpondeur RFID passif (20, 20A, 20B; 1220; 1320) comprenant une micropuce (21; 1321; 1421) stockant des informations d'identification.

9. Palier lisse selon l'une quelconque des revendications 1 à 8, **caractérisé en ce que** la zone critique (8) forme un point de rupture prédéterminé de l'élément coulissant (4) qui déclenche l'élément de détection (26) au niveau d'usure prédéterminé.

10. Palier lisse selon l'une des revendications 1 à 9, **caractérisé en ce que** le premier composant (3), à l'exception du dispositif de détection d'usure, est constitué principalement ou exclusivement de composants en matière plastique, le premier composant comprenant de préférence ledit au moins un ou plusieurs éléments coulissants (4), le cas échéant un logement de palier, et le dispositif (10 ... 1510) de détection d'usure.

11. Support par palier lisse comprenant un palier lisse (2) selon l'une quelconque des revendications 1 à 10, comprenant en outre le second composant (5), notamment un arbre, un rail ou une extrémité de tige, en particulier en métal.

12. Support par palier lisse selon la revendication 11, dans lequel le palier lisse (2) est conçu comme un palier rotatif, un guidage linéaire, un palier axial-radial ou comme un palier sphérique, qui supporte le deuxième composant avec un degré de liberté correspondant ou avec des degrés de liberté correspondants.

13. Coussinet lisse (4) en matière plastique tribologique pour un palier lisse destiné à être supporté sans lubrifiant, comprenant un transpondeur (20; 20A, 20B, 120 ... 1320) et un élément détecteur (26) dans une zone critique (8) du coussinet de palier lisse (4) qui est sensible à l'usure, en particulier à l'usure due au frottement de corps solides, l'élément détecteur (26), en cas d'une usure au niveau prédéterminé dans la zone critique, modifiant le comportement du transpondeur (20A; 20A; 20B, 120 ... 1320) et le transpondeur et l'élément détecteur étant encastrés dans le coussinet lisse (4) et le transpondeur étant réalisé avec l'élément détecteur sur une étiquette autocollante.

14. Coussinet lisse (4) selon la revendication 13 et suivant les caractéristiques selon la revendication 3 et/ou l'une des revendications 5 à 10.
